# EUROPEAN PATENT APPLICATION

(11) **EP 4 845 248 A1**
(43) Date of publication of application: **25.11.2026**
(21) Application number: 24923600.1
(22) Date of filing: 31.12.2024
(51) Int. Cl.: H04W 56/00

(54) **COMMUNICATION METHOD AND APPARATUS**

(30) Priority: 06.02.2024 CN 202410172307
(71) Applicant: Huawei Technologies Co., Ltd., Shenzhen, Guangdong 518129 (CN)
(72) Inventor: ZHANG, Qun, Shenzhen, Guangdong 518129 (CN); HAN, Yitao, Shenzhen, Guangdong 518129 (CN); ZHANG, Heng, Shenzhen, Guangdong 518129 (CN); FU, Kai, Shenzhen, Guangdong 518129 (CN); YU, Zhan, Shenzhen, Guangdong 518129 (CN)
(74) Representative: Huawei European IPR
(86) International application number: PCT/CN2024/144564
(87) International publication number: WO 2025/167398

(57) **Abstract**

A communication method and apparatus are disclosed. The method includes: A first apparatus may receive and process a first data frame. A frame type of the first data frame may be a SparkLink radio frame type 1 or a SparkLink radio frame type 2. The first data frame may include at least two sequences, and any two of the at least two sequences may be the same. In this method, a signal of a conventional SparkLink radio frame type 1 or a conventional SparkLink radio frame type 2 is extended, and an extended signal of the SparkLink radio frame type 1 or the SparkLink radio frame type 2, namely, the first data frame, may include at least two same sequences, so that a signal that can improve synchronization precision can be obtained.

## Description

### CROSS-REFERENCE TO RELATED APPLICATIONS

This application claims priority to Chinese Patent Application No. 202410172307.3, filed with the China National Intellectual Property Administration on February 6, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

An ultra-wideband (ultra-wideband, UWB) wireless technology is widely used in the field of ranging. To improve ranging precision, time synchronization and frequency synchronization (time-frequency synchronization for short) need to be performed on signals. Currently, a receiving apparatus may perform coarse time and frequency synchronization based on a narrowband signal, to obtain an initial estimated value. Then, the receiving apparatus may perform precise synchronization based on a wideband signal and the initial estimated value, to implement high-precision ranging.

Currently, the narrowband signal used for coarse time and frequency synchronization may include a narrowband signal like a signal of a SparkLink radio frame type 1 or a SparkLink radio frame type 2. However, the signal of the current SparkLink radio frame type 1 or the current SparkLink radio frame type 2 may not meet a precision requirement. Therefore, how to obtain a signal that can improve synchronization precision needs to be further studied.

### SUMMARY

This application provides a communication method and apparatus, to obtain a signal that can improve synchronization precision.

**According to a first aspect**, an embodiment of this application provides a communication method, and the method may be applied to a first apparatus. For example, the first apparatus may be a ranging responder or a ranging initiator, or may be a module (for example, a circuit, a chip, a chip system, or a processor) in the ranging responder or the ranging initiator, or may be a logical node, a logical module, or software that can implement all or some functions of the ranging responder or the ranging initiator. The method may include: The first apparatus may receive and process a first data frame. A frame type of the first data frame may be a SparkLink radio frame type 1 or a SparkLink radio frame type 2, the first data frame may include at least two sequences, and any two of the at least two sequences are the same.

In this method, a signal of the conventional SparkLink radio frame type 1 or the conventional SparkLink radio frame type 2 is extended, and an extended signal of the SparkLink radio frame type 1 or the SparkLink radio frame type 2 (namely, the first data frame) may include at least two same sequences, so that a signal that can improve synchronization precision can be obtained.

In a possible design, the first data frame may further include a cyclic redundancy check (cyclic redundancy check, CRC) field, and the at least two sequences may be located after the CRC field. In this design, impact on a conventional SparkLink radio frame structure can be avoided, and strong inheritability and extendibility are achieved.

In a possible design, a sequence used to control a spacing between adjacent sequences in the at least two sequences may exist between the adjacent sequences. In this design, a time difference between different sequences in the at least two sequences may be controlled by controlling the spacing between the adjacent sequences in the at least two sequences, so that complexity of processing the at least two sequences by the first apparatus can be reduced. For example, if the spacing is an integer multiple of two symbols, the first apparatus may process the at least two sequences through simple shifting. In addition, a phase of a signal changes periodically between 0 and 2 *π*. If a time difference between different sequences in the at least two sequences is excessively long, and a phase change between different sequences exceeds 2 *π*, the phase of the signal is reversed to 0. In this design, a time difference between different sequences in the at least two sequences is controlled, so that an excessively long time difference between different sequences in the at least two sequences can be avoided, thereby avoiding phase reversal and avoiding a calculation error of frequency offset estimation caused by the phase reversal. In addition, this design may further reduce or avoid impact of a channel environment change on the at least two sequences. For example, in this method, a spacing between adjacent sequences in the at least two sequences is controlled, so that an excessively long time difference between different sequences in the at least two sequences can be avoided, thereby reducing or avoiding impact of the channel environment change on autocorrelation processing performed based on the at least two sequences.

In a possible design, the first data frame may further include a CRC field, and one of the at least two sequences may be located before the CRC field. In this design, a SparkLink radio frame is slightly modified. In addition, in this design, a sequence in the conventional SparkLink radio frame is reused, thereby reducing overheads.

In a possible design, the first data frame may include a synchronization sequence field, the synchronization sequence field may be located before the CRC field, the at least two sequences may be a part or all of at least two synchronization sequences, and one of the at least two sequences may be included in the synchronization sequence field. In this design, a part or all of the synchronization sequences may be reused, the SparkLink radio frame is slightly modified, and overheads may be reduced.

In a possible design, the first data frame may include a physical layer data information field, the physical layer data information field may be located before the CRC field, the at least two sequences may be at least two data sequences, and one of the at least two sequences may be included in the physical layer data information field. In this design, a part or all of the data in the physical layer data information field may be reused, the SparkLink radio frame is slightly modified, and overheads may be reduced. In addition, the at least two sequences are at least two data sequences. In this way, an apparatus (for example, the first apparatus) for receiving the first data frame may combine the at least two data sequences, thereby reducing an error rate of data corresponding to the at least two data sequences.

In a possible design, N sequences in the at least two sequences may be located after the CRC field, and N is a positive integer. A sequence used to control a spacing between adjacent sequences in the N sequences exists between the adjacent sequences. In this design, a time difference between different sequences in the N sequences may be controlled by controlling the spacing between the adjacent sequences in the N sequences, so that complexity of processing the N sequences by the first apparatus can be reduced. In addition, a phase of a signal changes periodically between 0 and 2 *π*. If a time difference between different sequences in the N sequences is excessively long, and a phase change between different sequences exceeds 2 *π*, the phase of the signal is reversed to 0. In this design, a time difference between different sequences in the N sequences is controlled, so that an excessively long time difference between different sequences in the N sequences can be avoided, thereby avoiding phase reversal and avoiding a calculation error of frequency offset estimation caused by the phase reversal. In addition, this design may further reduce or avoid impact of a channel environment change on the N sequences. For example, in this method, a spacing between adjacent sequences in the N sequences is controlled, so that an excessively long time difference between different sequences in the N sequences can be avoided, thereby reducing or avoiding impact of the channel environment change on autocorrelation processing performed based on the N sequences.

In a possible design, the method may further include: The first apparatus may send first indication information, where the first indication information may indicate to transmit a first-type data frame or a second-type data frame. The first-type data frame may include all fields of the second-type data frame, and the first-type data frame includes the at least two sequences. The second-type data frame may not include the at least two sequences, or the second-type data frame may include one of the at least two sequences. In this design, the first apparatus may accurately indicate, by using the first indication information, to transmit the first-type data frame or the second-type data frame.

In a possible design, the method may further include: The first apparatus may determine to transmit the first-type data frame or the second-type data frame.

In some examples, the first apparatus may determine, based on synchronization precision of a data frame received within a first time period, to transmit the first-type data frame or the second-type data frame after the first time period. In this way, the first apparatus may accurately determine, based on the synchronization precision of the data frame received within the first time period, to transmit the first-type data frame or the second-type data frame after the first time period.

In some other examples, after receiving first feedback information from an ultra-wideband system, the first apparatus may determine, based on the first feedback information, to transmit the first-type data frame or the second-type data frame, where the first feedback information may indicate whether quality of a signal transmitted by the ultra-wideband system is greater than a first quality threshold. In this way, the first apparatus may accurately determine, based on the first feedback information received from the ultra-wideband system, to transmit the first-type data frame or the second-type data frame.

In a possible design, if the synchronization precision of the data frame received within the first time period is greater than a first precision threshold, the first apparatus may determine to transmit the second-type data frame after the first time period; and/or if the synchronization precision of the data frame received within the first time period is less than or equal to the first precision threshold, the first apparatus may determine to transmit the first-type data frame after the first time period. In this design, overheads can be reduced and a system throughput rate can be increased when the synchronization precision is ensured.

In a possible design, if the first feedback information indicates that the quality of the signal transmitted by the ultra-wideband system is greater than the first quality threshold, the first apparatus may determine to transmit the second-type data frame; and/or if the first feedback information indicates that the quality of the signal transmitted by the ultra-wideband system is less than or equal to the first quality threshold, the first apparatus may determine to transmit the first-type data frame. In this design, overheads can be reduced and a system throughput rate can be increased when the quality of the signal transmitted by the ultra-wideband system is ensured.

In a possible design, the method may further include: The first apparatus sends second indication information, where the second indication information may indicate to increase or decrease lengths of the at least two sequences when the first-type data frame is to be transmitted. The first-type data frame may include the at least two sequences. In this way, the first apparatus may accurately indicate, by using the second indication information, to increase or decrease the lengths of the at least two sequences when the first-type data frame is to be transmitted, so that the lengths of the at least two sequences can be flexibly adjusted, thereby avoiding unnecessary signaling overheads.

In a possible design, the method may further include: The first apparatus determines to increase or decrease the lengths of the at least two sequences.

In some examples, the first apparatus may determine, based on synchronization precision of a data frame received within a second time period, to increase or decrease the lengths of the at least two sequences after the second time period. In this way, the first apparatus may accurately determine, based on the synchronization precision of the data frame received within the second time period, to increase or decrease the lengths of the at least two sequences after the second time period.

In some other examples, after receiving second feedback information from the ultra-wideband system, the first apparatus may determine, based on the second feedback information, to increase or decrease the lengths of the at least two sequences, where the second feedback information may indicate whether the quality of the signal transmitted by the ultra-wideband system is greater than a second quality threshold. In this way, the first apparatus may accurately determine, based on the second feedback information received from the ultra-wideband system, to increase or decrease the lengths of the at least two sequences.

In a possible design, if the synchronization precision of the data frame received within the second time period is greater than a second precision threshold, the first apparatus may determine to decrease the lengths of the at least two sequences after the second time period; and/or if the synchronization precision of the data frame received within the second time period is less than or equal to the second precision threshold, the first apparatus may determine to increase the lengths of the at least two sequences after the second time period. In this design, overheads can be reduced and a system throughput rate can be increased when the synchronization precision is ensured.

In a possible design, if the second feedback information indicates that the quality of the signal transmitted by the ultra-wideband system is greater than the second quality threshold, the first apparatus may determine to decrease the lengths of the at least two sequences; and/or if the second feedback information indicates that the quality of the signal transmitted by the ultra-wideband system is less than or equal to the second quality threshold, the first apparatus may determine to increase the lengths of the at least two sequences. In this design, overheads can be reduced and a system throughput rate can be increased when the quality of the signal transmitted by the ultra-wideband system is ensured.

**According to a second aspect**, an embodiment of this application provides a communication method, and the method may be applied to a second apparatus. For example, the second apparatus may be a ranging responder or a ranging initiator, or may be a module (for example, a circuit, a chip, a chip system, or a processor) in the ranging responder or the ranging initiator, or may be a logical node, a logical module, or software that can implement all or some functions of the ranging responder or the ranging initiator. The method may include: The second apparatus may generate and send a first data frame. A frame type of the first data frame may be a SparkLink radio frame type 1 or a SparkLink radio frame type 2, the first data frame may include at least two sequences, and any two of the at least two sequences are the same.

In a possible design, the first data frame may further include a CRC field, and the at least two sequences may be located after the CRC field.

In a possible design, a sequence used to control a spacing between adjacent sequences in the at least two sequences exists between the adjacent sequences.

In a possible design, the first data frame may further include a CRC field, and one of the at least two sequences may be located before the CRC field.

In a possible design, the first data frame may include a synchronization sequence field, the synchronization sequence field may be located before the CRC field, the at least two sequences may be a part or all of at least two synchronization sequences, and one of the at least two sequences may be included in the synchronization sequence field.

In a possible design, the first data frame may include a physical layer data information field, the physical layer data information field may be located before the CRC field, the at least two sequences may be at least two data sequences, and one of the at least two data sequences may be included in the physical layer data information field.

In a possible design, N sequences in the at least two sequences may be located after the CRC field, and N is a positive integer. A sequence used to control a spacing between adjacent sequences in the N sequences exists between the adjacent sequences.

In a possible design, the method may further include: The second apparatus may receive first indication information, where the first indication information may indicate to transmit a first-type data frame or a second-type data frame. The first-type data frame may include all fields of the second-type data frame, and the first-type data frame may include the at least two sequences. The second-type data frame may not include the at least two sequences, or the second-type data frame may include one of the at least two sequences.

In a possible design, the method may further include: The second apparatus may receive second indication information, where the second indication information may indicate to increase or decrease lengths of the at least two sequences when the first-type data frame is to be transmitted. The first-type data frame includes the at least two sequences.

**According to a third aspect**, this application provides a communication apparatus. The communication apparatus may be a ranging responder or a ranging initiator, or may be a module (for example, a circuit, a chip, a chip system, or a processor) in the ranging responder or the ranging initiator, or may be a logical node, a logical module, or software that can implement all or some functions of the ranging responder or the ranging initiator. The communication apparatus has a function of implementing the first aspect. For example, the communication apparatus includes a corresponding module, unit, or means for performing the operations in the first aspect. The module, the unit, or the means may be implemented by software, may be implemented by hardware, or may be implemented by hardware executing corresponding software.

In a possible design, the communication apparatus includes an interface unit and a processing unit. The interface unit may be configured to: send and receive signals, to implement communication between the communication apparatus and another apparatus. The processing unit may be configured to perform some internal operations of the communication apparatus. Functions performed by the processing unit and the interface unit may correspond to the operations in the first aspect.

In a possible design, the communication apparatus includes a processor, and the processor may be configured to be coupled to a memory. The memory may store a computer program or instructions necessary for implementing functions in the first aspect. The processor may execute the computer program or the instructions stored in the memory. When the computer program or the instructions are executed, the communication apparatus is enabled to implement the method in any possible design of the first aspect.

In a possible design, the communication apparatus includes a processor and a memory. The memory may store a computer program or instructions necessary for implementing functions in the first aspect. The processor may execute the computer program or the instructions stored in the memory. When the computer program or the instructions are executed, the communication apparatus is enabled to implement the method in any possible design of the first aspect.

In a possible design, the communication apparatus includes a processor and an interface circuit. The processor is configured to communicate with another apparatus through the interface circuit, and perform the method in any possible design of the first aspect.

**According to a fourth aspect**, this application provides a communication apparatus. The communication apparatus may be a ranging responder or a ranging initiator, or may be a module (for example, a circuit, a chip, a chip system, or a processor) in the ranging responder or the ranging initiator, or may be a logical node, a logical module, or software that can implement all or some functions of the ranging responder or the ranging initiator. The communication apparatus has a function of implementing the second aspect. For example, the communication apparatus includes a corresponding module, unit, or means for performing the operations in the second aspect. The module, the unit, or the means may be implemented by software, may be implemented by hardware, or may be implemented by hardware executing corresponding software.

In a possible design, the communication apparatus includes an interface unit and a processing unit. The interface unit may be configured to: send and receive signals, to implement communication between the communication apparatus and another apparatus. The processing unit may be configured to perform some internal operations of the communication apparatus. Functions performed by the processing unit and the interface unit may correspond to the operations in the second aspect.

In a possible design, the communication apparatus includes a processor, and the processor may be configured to be coupled to a memory. The memory may store a computer program or instructions necessary for implementing functions in the second aspect. The processor may execute the computer program or the instructions stored in the memory. When the computer program or the instructions are executed, the communication apparatus is enabled to implement the method in any possible design of the second aspect.

In a possible design, the communication apparatus includes a processor and a memory. The memory may store a computer program or instructions necessary for implementing functions in the second aspect. The processor may execute the computer program or the instructions stored in the memory. When the computer program or the instructions are executed, the communication apparatus is enabled to implement the method in any possible design of the second aspect.

In a possible design, the communication apparatus includes a processor and an interface circuit. The processor is configured to communicate with another apparatus through the interface circuit, and perform the method in any possible design of the second aspect.

It may be understood that in the third aspect or the fourth aspect, the processor may be implemented by hardware or software. When the processor is implemented by hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

**According to a fifth aspect**, this application provides a communication system. The communication system may include the communication apparatus according to the third aspect and the communication apparatus according to the fourth aspect. For example, the communication system includes a ranging responder and a ranging initiator. The ranging responder is configured to perform the communication method provided in the first aspect, and the ranging initiator is configured to perform the communication method provided in the second aspect. Alternatively, the ranging initiator is configured to perform the communication method provided in the first aspect, and the ranging responder is configured to perform the communication method provided in the second aspect.

**According to a sixth aspect**, this application provides a computer-readable storage medium. The computer storage medium stores a computer program or instructions, and when the computer program or the instructions are executed, the method in any possible design of any one of the first aspect and the second aspect is implemented.

**According to a seventh aspect**, this application provides a computer program product. The computer program product includes computer program code, and when the computer program code is run, the method in any possible design of any one of the first aspect and the second aspect is implemented.

**According to an eighth aspect**, this application provides a chip. The chip is configured to read a computer program stored in a memory, to perform the method in any possible design of any one of the first aspect and the second aspect.

For technical effects that can be achieved in any one of the second aspect to the eighth aspect, refer to the descriptions of the technical effects that can be achieved in any possible design of the first aspect. Repeated parts are not described.

### BRIEF DESCRIPTION OF DRAWINGS

FIG. 1 is a diagram of an architecture of a communication system according to an embodiment of this application;
FIG. 2 is a diagram of time-frequency synchronization according to an embodiment of this application;
FIG. 3 is a diagram of a SparkLink radio frame according to an embodiment of this application;
FIG. 4 is a flowchart of a communication method according to an embodiment of this application;
FIG. 5A to FIG. 5D are diagrams of several data frames according to an embodiment of this application;
FIG. 6 is a diagram of autocorrelation processing according to an embodiment of this application;
FIG. 7 is a flowchart of another communication method according to an embodiment of this application;
FIG. 8 is a flowchart of still another communication method according to an embodiment of this application;
FIG. 9 is a flowchart of still another communication method according to an embodiment of this application;
FIG. 10 is a flowchart of still another communication method according to an embodiment of this application;
FIG. 11 is a diagram of a structure of a communication apparatus according to an embodiment of this application; and
FIG. 12 is a diagram of a structure of another communication apparatus according to an embodiment of this application.

### DESCRIPTION OF EMBODIMENTS

The following describes the technical solutions in embodiments of this application with reference to the accompanying drawings in embodiments of this application. The technical solutions in embodiments of this application may be applied to various communication systems that can use a UWB technology, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system (for example, a long term evolution (long term evolution, LTE) system), a 5th generation (5th generation, 5G) mobile communication system (for example, a new radio (new radio, NR) system), and a future evolved communication system (for example, a sixth generation (6th generation, 6G) mobile communication system).

All aspects, embodiments, or features are presented in this application by describing a system that may include a plurality of devices, components, modules, and the like. It should be appreciated and understood that each system may include another device, component, module, and the like, and/or may not include all devices, components, modules, and the like described with reference to the accompanying drawings. In addition, a combination of these solutions may be used.

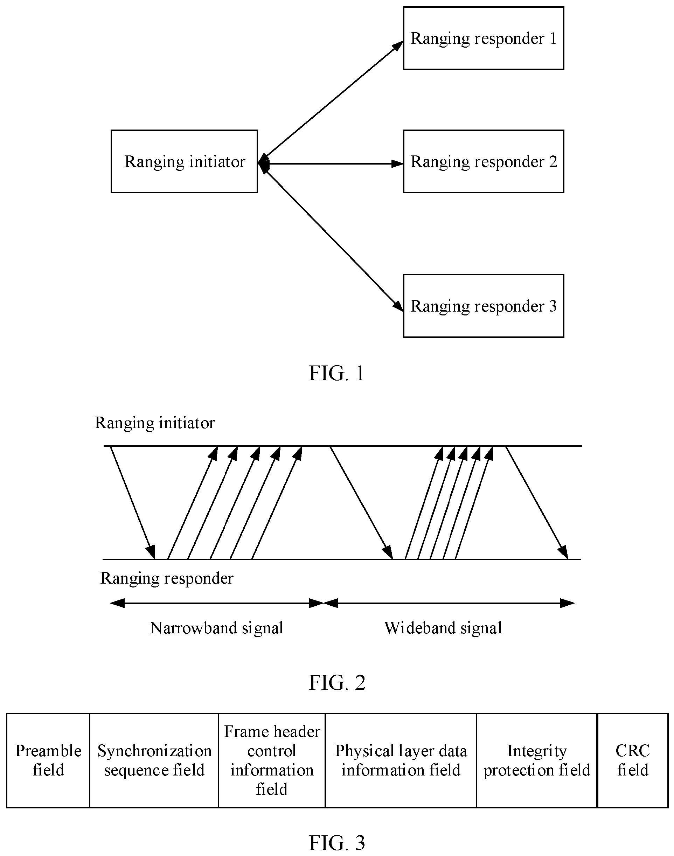

For ease of understanding embodiments of this application, FIG. 1 is a diagram of a possible and non-limiting communication system. As shown in FIG. 1, the communication system may include at least one ranging initiator (initiator, which may also be referred to as a ranging device) and at least one ranging responder (responder, which may also be referred to as a measured device). For example, one ranging initiator and a plurality of ranging responders (such as a ranging responder 1, a ranging responder 2, and a ranging responder 3 in FIG. 1) are shown as an example in FIG. 1. The communication system shown in FIG. 1 may be applied to scenarios such as synchronization, ranging, and positioning.

After the ranging initiator sends a ranging signal to the ranging responder, the ranging responder may reply the ranging initiator with a ranging response signal, to enable the ranging initiator to determine a distance between the ranging initiator and the ranging responder. For example, the ranging initiator may be an access network device, and the ranging responder may be a terminal. Alternatively, both the ranging initiator and the ranging responder may be terminals. Alternatively, the ranging initiator and/or the ranging responder may be other devices/another device that can implement ranging, for example, a UWB device. This is not limited in this application.

The access network device may also be referred to as a radio access network (radio access network, RAN) node, a RAN entity, an access node, or the like, and is configured to help the terminal implement radio access.

In a possible scenario, the access network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The access network device may be a macro base station, a micro base station, an indoor base station, a relay node, a donor node, or a radio controller in a CRAN scenario. Optionally, the access network device may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or some functions of the access network device in this application may alternatively be implemented through a software function running on hardware, or may be implemented through a virtualization function instantiated on a platform (for example, a cloud platform). The access network device in this application may alternatively be a logical node, a logical module, or software that can implement all or some of the functions of the access network device.

In another possible scenario, a plurality of access network devices coordinate to assist the terminal in implementing radio access, and different access network devices separately implement a part of functions of the base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may have different names, but a person skilled in the art may understand their meanings. For example, in an ORAN system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-UP, O-CU-UP), and the RU may also be referred to as an open RU (open RU, O-RU). Any one of the CU (or the CU-CP or the CU-UP), the DU, and the RU in this application may be implemented by using a software module, a hardware module, or a combination of the software module and the hardware module.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

A communication system and a service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and emergence of new service scenarios, the technical solutions provided in embodiments of this application are also applicable to similar technical problems.

The following first explains and describes related terms in embodiments of this application. It should be noted that these explanations are intended to make embodiments of this application easier to understand, but should not be considered as a limitation on the protection scope claimed in this application.

### (1) Ranging process using a UWB technology:

For example, the ranging process using the UWB technology may include: The ranging initiator transmits a ranging request signal at a moment of a time stamp Ta1 of the ranging initiator, and the ranging responder receives the ranging request signal at a moment of a time stamp Tb1 of the ranging responder. Then, the ranging responder transmits a ranging response signal at a moment of a time stamp Tb2 of the ranging responder, and the ranging initiator receives the ranging response signal at a moment of a time stamp Ta2 of the ranging initiator. The ranging initiator may calculate, by using (Tb2-Tb1) and (Ta2-Ta1), transmission time of signals (the ranging request signal and the ranging response signal) between the two devices, to determine a distance between the two devices. The receiving time stamps such as the time stamps Tb1 and Ta2 are obtained by using a synchronization signal part in the ranging response signal. The synchronization signal is known to both devices, and the synchronization signal is obtained based on a synchronization sequence.

To improve precision of ranging using the UWB technology, time synchronization and frequency synchronization (time-frequency synchronization for short) need to be performed on signals generated between the ranging initiator and the ranging responder. As shown in FIG. 2, currently, a signal receiving apparatus may first perform coarse time and frequency synchronization based on a narrowband signal, to obtain an initial estimated value. Then, the signal receiving apparatus may perform precise synchronization based on a wideband signal (for example, a signal to which the UWB technology is applied) and the initial estimated value, to implement high-precision ranging.

### (2) SparkLink radio frame type:

When a narrowband signal is used to perform coarse time and frequency synchronization, the narrowband signal may include a SparkLink radio frame. For example, the narrowband signal may be a signal of a SparkLink radio frame type 1 or a SparkLink radio frame type 2. As shown in FIG. 3, the SparkLink radio frame may include one or more of the following fields: a preamble field, a synchronization sequence field, a frame header control information field, a physical layer data information field (which may also be referred to as a payload (payload) data information field), an integrity protection field, and a CRC field. With reference to the foregoing fields, the following separately describes the signal of the SparkLink radio frame type 1 or the SparkLink radio frame type 2.

### 1. Signal of the SparkLink radio frame type 1:

Waveform modulation may be performed on the signal of the SparkLink radio frame type 1 through Gaussian frequency shift keying (Gaussian frequency shift keying, GFSK), and a 1-megahertz (MHz) symbol rate, a 2 MHz symbol rate, and a 4 MHz symbol rate may be supported. The signal of the SparkLink radio frame type 1 may include a preamble field, a synchronization sequence field, a frame header control information field, a physical layer data information field, and a CRC field. Optionally, the signal of the SparkLink radio frame type 1 further includes an integrity protection field. The preamble field may include a preamble, and a first element of a preamble sequence in the preamble is the same as a first element of a synchronization sequence. The synchronization sequence field may include a 32-bit synchronization sequence. After GFSK modulation is performed on the 32-bit synchronization sequence, 32 symbols may be generated. The frame header control information field may include frame header control information, and channel coding may not be performed on the frame header control information field. The physical layer data information field may include data, and a unit of the data in the physical layer data information field may be a byte. The integrity protection field may be used to perform integrity protection on the data in the physical layer data information field. The CRC field may be used to perform cyclic redundancy check on the physical layer data information field and/or the integrity protection field. A length of the CRC field may be 24 bits or 32 bits.

Optionally, the signal of the SparkLink radio frame type 1 may not include a pilot symbol.

### 2. Signal of the SparkLink radio frame type 2:

Waveform modulation may be performed on the signal of the SparkLink radio frame type 2 through phase-shift keying (phase-shift keying, PSK), and a 1 MHz symbol rate, a 2 MHz symbol rate, and a 4 MHz symbol rate are supported. The signal of the SparkLink radio frame type 2 may include a preamble field, a synchronization sequence field, a frame header control information field, a physical layer data information field, and a CRC field. Optionally, the signal of the SparkLink radio frame type 2 further includes an integrity protection field. The preamble field may include a preamble, and a phase of a preamble sequence in the preamble may be alternately transformed into π/4 and 0. The synchronization sequence field may include a 64-bit synchronization sequence. After PSK modulation and phase rotation are performed on the 64-bit synchronization sequence, 32 symbols may be generated. The frame header control information field may include frame header control information. The frame header control information may be processed to obtain 32 control information symbols, and one pilot symbol may be inserted after every 16 control information symbols. The physical layer data information field may include data, and a unit of the data in the physical layer data information field may be a byte. The integrity protection field may be used to perform integrity protection on the data in the physical layer data information field. The CRC field may be used to perform cyclic redundancy check on the physical layer data information field and/or the integrity protection field. A length of the CRC field may be 24 bits or 32 bits.

### (3) Signal quality:

In this application, the signal quality may be signal strength. A parameter used for reflecting or representing the signal strength may include but is not limited to at least one of the following: reference signal received power (reference signal received power, RSRP), reference signal received quality (reference signal received quality, RSRQ), or a received signal strength indication (received signal strength indication, RSSI).

(4) In the following descriptions of this application, "greater than" may be replaced with "greater than or equal to", and/or "less than or equal to" may be replaced with "less than".

(5) In the following descriptions of this application, an ultra-wideband system may be a system or module that uses a UWB technology, and a signal transmitted by the ultra-wideband system may be referred to as a wideband signal or an ultra-wideband signal. In this application, a bandwidth (or a frequency range) corresponding to a narrowband signal is less than a bandwidth (or a frequency range) corresponding to a wideband signal. For example, the bandwidth corresponding to the wideband signal may be greater than a bandwidth threshold 1, the bandwidth corresponding to the narrowband signal may be less than a bandwidth threshold 2, and the bandwidth threshold 1 is greater than or equal to the bandwidth threshold 2.

(6) In the following descriptions of this application, transmission may include sending and/or receiving.

(7) In the following descriptions of this application, "sending information to a device (for example, a terminal)" may be understood as that a destination end of the information is the device, and may include directly or indirectly sending the information to the device. "Receiving information from a device (for example, a terminal)" or "receiving information that is from a device (for example, a terminal)" may be understood as that a source end of the information is the device, and may include directly or indirectly receiving the information from the device. Necessary processing, for example, a format change, may be performed on the information between the source end and the destination end for sending the information, but the destination end can understand valid information from the source end. A similar expression in this application may be understood similarly, and details are not described herein again.

As described above, the signal receiving apparatus may perform coarse time and frequency synchronization based on the narrowband signal, to obtain the initial estimated value. When the narrowband signal is a signal of the SparkLink radio frame type 1 or the SparkLink radio frame type 2, the receiving apparatus may perform cross-correlation processing on a synchronization sequence in the narrowband signal and a locally stored synchronization sequence template, to perform coarse time and frequency synchronization. However, in a complex communication environment, a multipath effect may cause phase distortion, thereby reducing synchronization precision. Specifically, for one signal sent by a sending apparatus, the receiving apparatus may receive a plurality of signal copies from different paths. Different signal copies in the plurality of signal copies may have different delays and energy attenuation. If a time difference between arrival of different signal copies in the plurality of signal copies at the receiving apparatus is large, superposition of the plurality of signal copies may result in mutual cancellation. In this case, the signal received by the receiving apparatus is distorted, and time-frequency synchronization precision obtained by performing a correlation operation on a synchronization sequence in the distorted signal and a locally stored synchronization sequence template is also low. How to obtain a signal that can improve synchronization precision needs to be further studied.

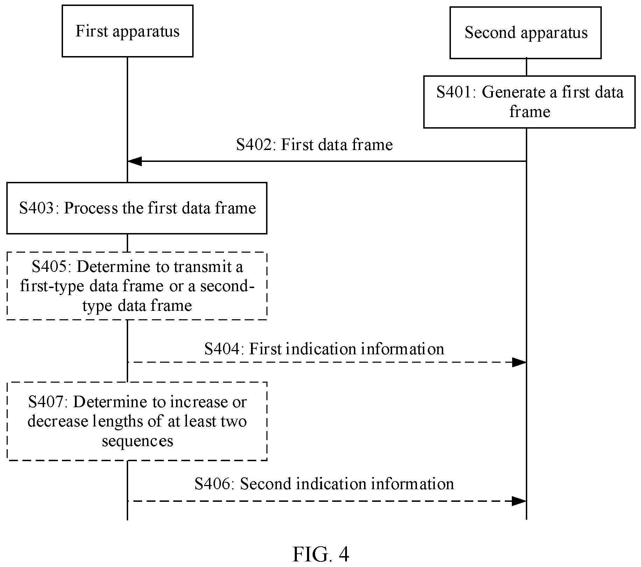

In view of this, embodiments of this application provide a communication method. FIG. 4 is a schematic flowchart corresponding to the communication method according to an embodiment of this application. In FIG. 4, an example in which a first apparatus and a second apparatus are used as execution bodies of the interaction illustration is used to illustrate the method. However, the execution bodies of the interaction illustration are not limited in this application. For example, the first apparatus may be a ranging responder, or may be a module used in a ranging responder, for example, a circuit, a chip, a chip system, or a processor, or may be a logical node, a logical module, or software that can implement all or some functions of a ranging responder. The second apparatus may be a ranging initiator, or may be a module used in a ranging initiator, for example, a circuit, a chip, a chip system, or a processor, or may be a logical node, a logical module, or software that can implement all or some functions of a ranging initiator. For another example, the first apparatus may be a ranging initiator, or may be a module used in a ranging initiator, for example, a circuit, a chip, a chip system, or a processor, or may be a logical node, a logical module, or software that can implement all or some functions of a ranging initiator. The second apparatus may be a ranging responder, or may be a module used in a ranging responder, for example, a circuit, a chip, a chip system, or a processor, or may be a logical node, a logical module, or software that can implement all or some functions of a ranging responder.

As shown in FIG. 4, the method includes the following steps.

**S401**: The second apparatus generates a first data frame.

A frame type of the first data frame may be a SparkLink radio frame type 1 or a SparkLink radio frame type 2. Compared with that of a conventional SparkLink radio frame type 1 or a conventional SparkLink radio frame type 2, the first data frame is extended in this application. Therefore, a name of the frame type of the first data frame may also change. For example, the frame type of the first data frame may be an extended SparkLink radio frame type 1 or an extended SparkLink radio frame type 2, or may be a SparkLink radio frame type 5 or a SparkLink radio frame type 6. As long as a same structure is included, the frame type falls within the protection scope of this application. For specific content of the conventional SparkLink radio frame type 1 and SparkLink radio frame type 2, respectively refer to descriptions of the SparkLink radio frame type 1 and the SparkLink radio frame type 2 in the foregoing term explanation description part. Details are not described herein again.

The first data frame may include at least two sequences, and any two of the at least two sequences are the same. In other words, the first data frame may include at least two same sequences. Lengths of the at least two sequences may be preset, for example, specified in a protocol, or may be determined by the second apparatus, or may be notified to the second apparatus after being determined by another apparatus (for example, the first apparatus). This is not limited in this application. Optionally, lengths of the at least two sequences may be related to a requirement for synchronization precision. For example, a higher requirement for synchronization precision indicates larger lengths of the at least two sequences, and vice versa.

There may be a plurality of possible manners for positions of the at least two sequences in the first data frame, for example, Manner a1 or Manner a2.

**Manner a1**: The first data frame may include a CRC field, and the at least two sequences may be located after the CRC field. In other words, in the first data frame, the at least two sequences may be included in a field after the CRC field. For example, the at least two sequences may be included at the end of the first data frame. With reference to the accompanying drawings, the following describes the first data frame in Manner a1 by using an example.

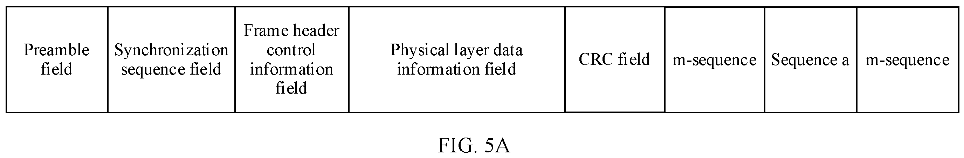

For example, as shown in FIG. 5A, the first data frame may include a preamble field, a synchronization sequence field, a frame header control information field, a physical layer data information field, and a CRC field. The first data frame may further include the at least two sequences, and the at least two sequences may be two m-sequences. The two m-sequences may be located after the CRC field.

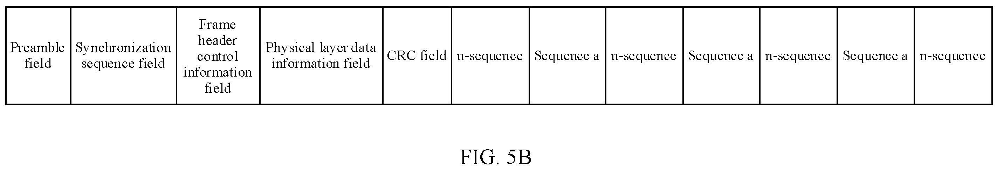

For another example, as shown in FIG. 5B, the first data frame may include a preamble field, a synchronization sequence field, a frame header control information field, a physical layer data information field, and a CRC field. The first data frame may further include the at least two sequences, and the at least two sequences may be four n-sequences. The four n-sequences may be located after the CRC field. Optionally, a length of the n-sequence may be less than a length of the m-sequence.

In Manner a1, the at least two sequences may be located after the CRC field, so that impact on a conventional SparkLink radio frame structure can be avoided, and strong inheritability and extendibility are achieved.

Optionally, in Manner a1, a sequence (referred to as a sequence a below for short) used to control a spacing between adjacent sequences in the at least two sequences exists between the adjacent sequences. A name of the sequence a may be a spacing control sequence, or may be another name provided that a same function is implemented. This is not limited in this application. A length of the sequence a may be one or more bits. For example, a first sequence is any one of the at least two sequences, and a sequence a1 is a sequence a that is after the first sequence and that is adjacent to the first sequence. If a length of the first sequence is an odd number, a length of the sequence a1 may be an odd number of bits (for example, one bit). Content of the sequence a may be expressed in a plurality of forms, for example, a pilot code, a spreading code, a fixed sequence, or any other sequence.

In this method, a time difference between different sequences in the at least two sequences may be controlled by controlling the spacing between the adjacent sequences in the at least two sequences, so that complexity of processing the at least two sequences by the first apparatus can be reduced. For example, if the spacing is an integer multiple of two symbols, the first apparatus may process the at least two sequences through simple shifting.

In addition, a phase of a signal changes periodically between 0 and 2 *π*. If a time difference between different sequences in the at least two sequences is excessively long, and a phase change between different sequences exceeds 2 *π*, the phase of the signal is reversed to 0. In this method, a time difference between different sequences in the at least two sequences is controlled, so that an excessively long time difference between different sequences in the at least two sequences can be avoided, thereby avoiding phase reversal and avoiding a calculation error of frequency offset estimation caused by the phase reversal.

In addition, the method may further reduce or avoid impact of a channel environment change on the at least two sequences. For example, in this method, a spacing between adjacent sequences in the at least two sequences is controlled, so that an excessively long time difference between different sequences in the at least two sequences can be avoided, thereby reducing or avoiding impact of the channel environment change on autocorrelation processing performed based on the at least two sequences.

**Manner a2**: The first data frame may further include a CRC field, and one of the at least two sequences may be located before the CRC field. In other words, in the first data frame, one of the at least two sequences may be included in a field before the CRC field, or one of the at least two sequences may reuse a sequence in a conventional SparkLink radio frame, or the at least two sequences may be obtained by copying a sequence in the conventional SparkLink radio frame. In this manner, the SparkLink radio frame is slightly modified. In addition, in this manner, the sequence in the conventional SparkLink radio frame is reused, thereby reducing overheads.

Optionally, in Manner a2, N sequences in the at least two sequences may be located after the CRC field, and N is a positive integer. In other words, in the first data frame, the N sequences in the at least two sequences may be included in a field after the CRC field. For example, if the at least two sequences are two sequences, one of the two sequences may be located before the CRC field, and the other may be located after the CRC field. For another example, if the at least two sequences include at least three sequences, one of the at least three sequences may be located before the CRC field, and the other sequences of the at least three sequences may be located after the CRC field. In this manner, the SparkLink radio frame is slightly modified.

In some implementations, a sequence used to control a spacing between adjacent sequences in the N sequences exists between the adjacent sequences. For specific content of the sequence used to control the spacing between the adjacent sequences, refer to the descriptions of the sequence a in Manner a1. Only the at least two sequences are replaced with the N sequences. Details are not described herein again. Optionally, spacings between different adjacent sequences in the N sequences are the same. For example, the N sequences successively include a sequence #1, a sequence #2, and a sequence #3. A spacing between the sequence #1 and the sequence 2 is the same as a spacing between the sequence #2 and the sequence #3.

In Manner a2, there may be a plurality of possible manners for the at least two sequences, for example, Manner b1 or Manner b2.

**Manner b1**: The at least two sequences may be a part or all of the at least two synchronization sequences. In other words, the at least two sequences may be obtained by copying the part or all of the synchronization sequences. One of the at least two sequences may be included in a synchronization sequence field of the first data frame, and the synchronization sequence field may be located before the CRC field.

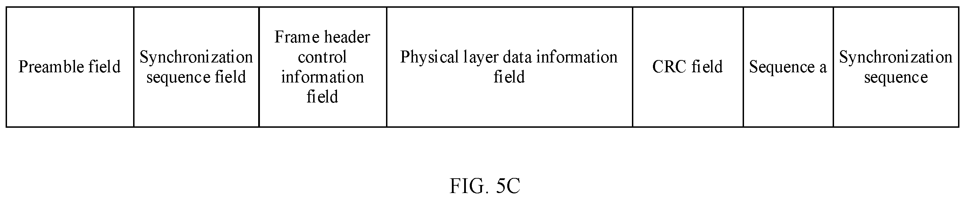

For example, as shown in FIG. 5C, the first data frame may include a preamble field, the synchronization sequence field, a frame header control information field, a physical layer data information field, and the CRC field. The at least two sequences may be two synchronization sequences, a 1^{st} synchronization sequence in the two synchronization sequences may be included in the synchronization sequence field, and the synchronization sequence field may be located before the CRC field. Optionally, the other sequence in the two synchronization sequences may be located after the CRC field.

In this manner, a part or all of the synchronization sequences may be reused, the SparkLink radio frame is slightly modified, and overheads may be reduced.

Optionally, in Manner b1, a length of data (namely, a length of a payload (payload)) in the physical layer data information field may be less than a length threshold. The length threshold may be preset, for example, specified in a protocol, or may be determined by the second apparatus, or may be notified to the second apparatus after being determined by another apparatus. This is not limited in this application. In this manner, the length of the data in the physical layer data information field is not excessively long, so that an excessively long time difference between different sequences in the at least two sequences can be avoided, thereby avoiding generation of phase reversal, avoiding an incorrect calculation of frequency offset estimation caused by the phase reversal, and reducing or avoiding impact of the channel environment change on autocorrelation processing performed based on the at least two sequences.

**Manner b2**: The at least two sequences are at least two data sequences. In other words, the at least two sequences may be obtained by copying a part or all of data. One of the at least two sequences may be included in the physical layer data information field of the first data frame, and the physical layer data information field may be located before the CRC field.

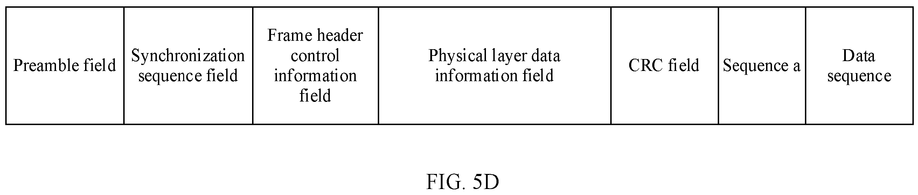

For example, as shown in FIG. 5D, the first data frame may include a preamble field, the synchronization sequence field, a frame header control information field, a physical layer data information field, and the CRC field. The at least two sequences may be two data sequences, a 1^{st} data sequence in the two data sequences may be included in the physical layer data information field, the first data sequence may be a part or all of data of the physical layer data information field, and the synchronization sequence field may be located before the CRC field. Optionally, the other sequence in the two data sequences may be located after the CRC field.

In this manner, a part or all of the data in the physical layer data information field may be reused, the SparkLink radio frame is slightly modified, and overheads may be reduced. In addition, the at least two sequences are at least two data sequences. In this way, an apparatus (for example, the first apparatus) for receiving the first data frame may combine the at least two data sequences, thereby reducing an error rate of data corresponding to the at least two data sequences.

In some implementations, the N sequences in the at least two sequences may be located after the CRC field, and a sequence (referred to as a sequence a below) used to control a spacing between adjacent sequences may exist between a 1^{st} sequence in the N sequences and the CRC field. For example, as shown in FIG. 5C, the sequence a may be used to control a spacing between a synchronization sequence in the synchronization sequence field and a synchronization sequence after the sequence a. For another example, as shown in FIG. 5D, the sequence a may be used to control a spacing between a data sequence in the physical layer data information field and a data sequence after the sequence a. For a possible name and content of the sequence a, refer to the descriptions of the sequence a in Manner a1. Details are not described herein again.

**S402**: The second apparatus sends the first data frame, and correspondingly, the first apparatus receives the first data frame.

**S403**: The first apparatus processes the first data frame.

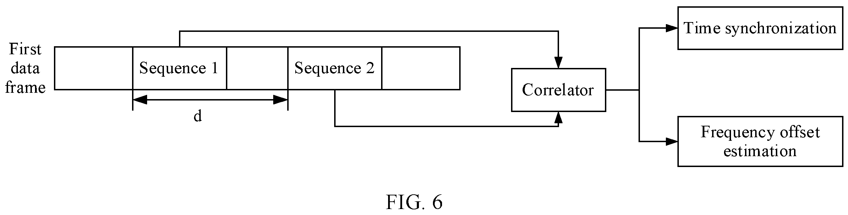

Optionally, the first apparatus may perform time synchronization and/or frequency offset estimation based on the first data frame. In other words, the first apparatus may perform time synchronization and/or frequency offset estimation based on the at least two sequences. For example, the first apparatus may perform autocorrelation processing based on the at least two sequences in the first data frame, and may perform time synchronization and/or frequency offset estimation based on a result of autocorrelation processing. The following uses an example in which the at least two sequences include two sequences for specific description with reference to FIG. 6.

The first apparatus may perform autocorrelation processing according to Formula (1), to obtain the result of autocorrelation processing. In other words, the two sequences and the result of autocorrelation processing may satisfy Formula (1), or the first apparatus may input the two sequences to a correlator, and the correlator outputs the result of autocorrelation processing according to Formula (1). $z = {\sum }_{i = 0}^{L - 1} \left({r}_{2}\left[i\right]\right) ∗ \left({r}_{1}*\left[i\right]\right) = {e}^{j \left(2πfdΔt\right)} {\sum }_{i = 0}^{L - 1} \left|{r}_{2}\left[i\right]\right| \left|{r}_{1}\left[i\right]\right|$ (1)

Herein, z may be the result of autocorrelation processing. The two sequences may include a sequence 1 and a sequence 2. The sequence 1 is *r*₁[i] = *A*₁*e*^{*j*(2*πf*₁*t*)}, and the sequence 2 is *r*₂[i] = *A*₂*e*^{*j*(2*πf*₂*t*)}. In the first data frame, *r*₁[i] is located before *r*₂[i]. In other words, *r*₁[i] is a 1^{st} sequence in the two sequences, and *r*₂[i] is a 2^{nd} sequence in the two sequences. L is a quantity of symbols corresponding to each of the two sequences. d is a symbol spacing between symbols at same positions in *r*₁[i] and *r*₂[i] . For example, *r*₁[i] and *r*₂[i] each include four symbols, and d is a symbol spacing between a 1^{st} symbol in *r*₁[i] and a 1^{st} symbol in *r*₂[i].

The first apparatus may obtain a result of frequency offset estimation according to Formula (2), that is, obtain a frequency offset estimation value. In other words, the result of autocorrelation processing and the frequency offset estimation value satisfy Formula (2). $Δ f = \frac{arg \left(z\right)}{2 πd Δ t}$ (2)

Herein, Δ*f* may be the frequency offset estimation value. Δt may be a time interval between two adjacent symbols in the first data frame. arg(z) is a principal value of an argument of z. For example, if *z* = *r* ∗ (cosθ + i ∗ sin θ), arg(z)=θ.

Optionally, after obtaining the frequency offset estimation value, the first apparatus may perform frequency offset compensation. For example, the first apparatus may perform frequency offset compensation according to Formula (3), to obtain a result *r*₂*'*[*i*] of *r*₂[*i*] after frequency offset compensation. ${r}_{2} ′ \left[i\right] = {r}_{2} \left[i\right] {e}^{- j \left(2πΔft\right)}$ (3)

Then, the first apparatus may perform autocorrelation processing according to Formula (4), to obtain a result P of autocorrelation processing after frequency offset compensation. In other words, the at least two sequences and the result P of autocorrelation processing after frequency offset compensation may satisfy Formula (4). $P = {\sum }_{i = 0}^{L - 1} \left({r}_{2}′\left[i\right]\right) ∗ \left({r}_{1}*\left[i\right]\right)$ (4)

Then, the first apparatus may substitute P as z into Formula (2), and repeat the foregoing procedure, to obtain a plurality of results of autocorrelation processing. A moment corresponding to a point at which a result of the autocorrelation processing is a peak value is a moment of time synchronization between the first apparatus and the second apparatus, and a frequency offset estimation value corresponding to the moment is the frequency offset estimation value output by the first apparatus. The first apparatus may perform frequency offset compensation on a subsequent signal based on the frequency offset estimation value.

It should be understood that the foregoing uses the two sequences as an example for description. When the at least two sequences include at least three sequences, the first apparatus may perform the foregoing processing on any two sequences, or may perform the foregoing autocorrelation processing after randomly combining sequences in the at least three sequences, until the frequency offset estimation value converges, for example, until an error of frequency offset estimation is less than an error threshold. The error threshold may be preset, for example, specified in a protocol, or may be determined by the first apparatus, or may be notified to the first apparatus after being determined by another apparatus (for example, the second apparatus). This is not limited in this application.

In the method shown in FIG. 4, a signal of the conventional SparkLink radio frame type 1 or the conventional SparkLink radio frame type 2 is extended, and an extended signal of the SparkLink radio frame type 1 or the SparkLink radio frame type 2 (namely, the first data frame) may include at least two same sequences, so that a signal that can improve synchronization precision can be obtained.

In addition, the first apparatus performs time synchronization and/or frequency offset estimation based on the at least two sequences, so that synchronization precision can be improved.

For example, a multipath effect may be simultaneously applied to the at least two same sequences. When autocorrelation processing is performed on the at least two same sequences, phase distortion generated by the multipath effect may cancel each other out during autocorrelation processing, thereby reducing impact of the multipath effect on the result of autocorrelation processing, and improving time synchronization precision.

For another example, the first apparatus may perform coarse time and frequency synchronization based on the first data frame, to obtain an initial estimated value. Then, the first apparatus may perform autocorrelation processing based on the initial estimated value and the at least two sequences in the first data frame, to estimate an accurate residual error, reduce an error of frequency offset estimation, and improve precision of frequency offset estimation.

In some possible manners, the method shown in FIG. 4 further includes the following step.

**S404**: The first apparatus sends first indication information, and correspondingly, the second apparatus receives the first indication information.

The first indication information may indicate to transmit a first-type data frame or a second-type data frame. The first-type data frame may include all fields of the second-type data frame, and the first-type data frame may include the at least two sequences. For example, the first-type data frame may be an extended signal of the SparkLink radio frame type 1 or the SparkLink radio frame type 2. For example, the first-type data may include the first data frame described above. For content of any first-type data frame, refer to the foregoing descriptions of the first data frame. The second-type data frame may not include the at least two sequences, or the second-type data frame includes one of the at least two sequences. For example, the second-type data frame may be a signal of the conventional SparkLink radio frame type 1 or the conventional SparkLink radio frame type 2. For specific content of the second-type data frame, refer to descriptions of the SparkLink radio frame type 1 and the SparkLink radio frame type 2 in the foregoing term explanation description part.

As described above, the first indication information may indicate to transmit the first-type data frame or the second-type data frame. For example, if a value of the first indication information is a first value (for example, 0), it indicates to transmit the first-type data frame; and/or if the value of the first indication information is a second value (for example, 1), it indicates to transmit the second-type data frame.

In this manner, the first apparatus may accurately indicate, by using the first indication information, to transmit the first-type data frame or the second-type data frame.

Optionally, the method shown in FIG. 4 further includes the following step.

**S405**: The first apparatus determines to transmit the first-type data frame or the second-type data frame.

Optionally, S405 and S404 may be combined or not combined. For example, when S405 and S404 are combined, S405 may be performed before S404. For another example, after the first apparatus determines to transmit the first-type data frame or the second-type data frame, the first apparatus may transmit a data frame of a corresponding type based on a determining result. In this case, S405 and S404 may not be combined.

S405 may be implemented in a plurality of manners, for example, Manner c1 or Manner c2.

**Manner c1**: The first apparatus may determine, based on synchronization precision of a data frame received within a first time period, to transmit the first-type data frame or the second-type data frame after the first time period.

In Manner c1, the first apparatus may first determine the synchronization precision of the data frame received within the first time period, and there may be a plurality of determining manners. For example, the first apparatus may record a first parameter corresponding to each of one or more data frames received within the first time period, to obtain one or more first parameters. The one or more data frames may be a part or all of the data frames received by the first apparatus in the first time period, and the first parameter may include a moment corresponding to time synchronization and/or a frequency offset estimation value. Then, the first apparatus may determine, based on the one or more first parameters, the synchronization precision of the data frame received within the first time period. For example, the synchronization precision of the data frame received within the first time period may be inversely proportional to a variance or a mean square error of the one or more first parameters. It should be understood that this example is merely used as an example. The first apparatus may alternatively determine, in another manner, the synchronization precision of the data frame received within the first time period. This is not limited in this application.

Duration of the first time period may be preset, for example, specified in a protocol, or may be determined by the first apparatus, or may be notified to the first apparatus after being determined by another apparatus (for example, the second apparatus). This is not limited in this application.

In Manner c1, the first apparatus may also determine, in a plurality of manners, to transmit the first-type data frame or the second-type data frame after the first time period. The following uses an example for description.

In some examples, if the synchronization precision of the data frame received within the first time period meets a requirement for the synchronization precision, for example, if the synchronization precision of the data frame received within the first time period is greater than a first precision threshold, the first apparatus may determine to transmit the second-type data frame after the first time period. The data frame received by the first apparatus within the first time period may be a first-type data frame, or may be a second-type data frame. In this example, when the requirement for the synchronization precision is met, the second-type data frame may be transmitted between the first apparatus and the second apparatus, so that overheads can be reduced and a system throughput rate can be increased when the requirement for the synchronization precision is met.

In some other examples, if the synchronization precision of the data frame received within the first time period does not meet the requirement for the synchronization precision, for example, if the synchronization precision of the data frame received within the first time period is less than or equal to the first precision threshold, the first apparatus may determine to transmit the first-type data frame after the first time period. The data frame received by the first apparatus within the first time period may be a first-type data frame, or may be a second-type data frame. In this example, when the requirement for the synchronization precision is not met, the first-type data frame may be transmitted between the first apparatus and the second apparatus, so that the synchronization precision can be improved.

The first precision threshold may be preset, for example, specified in a protocol, or may be determined by the first apparatus, or may be notified to the first apparatus after being determined by another apparatus (for example, the second apparatus). This is not limited in this application.

In Manner c1, the first apparatus may accurately determine, based on the synchronization precision of the data frame received within the first time period, to transmit the first-type data frame or the second-type data frame after the first time period.

### Manner c2:

Manner c2 may include Step A1 and Step A2.

**Step A1**: The first apparatus may receive first feedback information from an ultra-wideband system, where the first feedback information may indicate whether quality of a signal transmitted by the ultra-wideband system is greater than a first quality threshold.

There may be a plurality of forms of a relationship between the first apparatus and the ultra-wideband system. In some examples, the first apparatus may include the ultra-wideband system. In this case, the first apparatus may transmit not only a wideband signal, but also a narrowband signal like a signal of the SparkLink radio frame type 1 and the SparkLink radio frame type 2. In some other examples, the first apparatus may not include the ultra-wideband system. In this case, the first apparatus may transmit a narrowband signal like a signal of the SparkLink radio frame type 1 and the SparkLink radio frame type 2, but does not transmit a wideband signal.

As described above, the first feedback information may indicate whether the quality of the signal transmitted by the ultra-wideband system is greater than the first quality threshold. In this way, the first apparatus may determine, based on the first feedback information, whether the quality of the signal transmitted by the ultra-wideband system is greater than the first quality threshold. In some implementations, the first feedback information may include information indicating whether the quality of the signal transmitted by the ultra-wideband system is greater than the first quality threshold. For example, if a value of the first feedback information is a third value (for example, 0), it indicates that the quality of the signal transmitted by the ultra-wideband system is greater than the first quality threshold; and/or if the value of the first feedback information is a fourth value (for example, 1), it indicates that the quality of the signal transmitted by the ultra-wideband system is less than or equal to the first quality threshold. In some other implementations, the first feedback information may include the quality of the signal transmitted by the ultra-wideband system. The first apparatus may determine, based on the quality of the signal transmitted by the ultra-wideband system, whether the quality of the signal transmitted by the ultra-wideband system is greater than the first quality threshold.

The first quality threshold may be preset, for example, specified in a protocol, or may be determined by the first apparatus or the ultra-wideband system, or may be notified to the first apparatus or the ultra-wideband system after being determined by another apparatus (for example, the second apparatus). This is not limited in this application.

**Step A2**: The first apparatus may determine, based on the first feedback information, to transmit the first-type data frame or the second-type data frame.

For example, if the first feedback information indicates that the quality of the signal transmitted by the ultra-wideband system is greater than the first quality threshold, the first apparatus may determine to transmit the second-type data frame; and/or if the first feedback information indicates that the quality of the signal transmitted by the ultra-wideband system is less than or equal to the first quality threshold, the first apparatus may determine to transmit the first-type data frame. In this example, overheads can be reduced and a system throughput rate can be increased when the quality of the signal transmitted by the ultra-wideband system is ensured.

Optionally, Manner c1 and Manner c2 may be combined or not combined. The following describes a possible example of combining Manner c1 and Manner c2.

In some examples, if the first apparatus receives the first feedback information within the first time period, the first apparatus may determine, in Manner c2, to transmit the first-type data frame or the second-type data frame after receiving the first feedback information. If the first apparatus does not receive the first feedback information when the first time period ends, the first apparatus may determine, in Manner c1, to transmit the first-type data frame or the second-type data frame after the first time period. For example, start time of the first time period is T0, and end time of the first time period is T1. If the first apparatus receives the first feedback information at T2, and T2 is between T0 and T1, the first apparatus may determine, in Manner c2, to transmit the first-type data frame or the second-type data frame after T2. If the first apparatus does not receive the first feedback information when the first time period ends, the first apparatus may determine, in Manner c1, to transmit the first-type data frame or the second-type data frame after T1.

Optionally, if the first apparatus receives the first feedback information when the first time period ends, the first apparatus may determine, based on the synchronization precision of the data frame received within the first time period and the first feedback information, to transmit the first-type data frame or the second-type data frame after the first time period. For example, if the synchronization precision of the data frame received within the first time period meets the requirement for the synchronization precision, and the first feedback information indicates that the quality of the signal transmitted by the ultra-wideband system is greater than the first quality threshold, the first apparatus may determine to transmit the second-type data frame after the first time period. For another example, if the synchronization precision of the data frame received within the first time period does not meet the requirement for the synchronization precision, and/or the first feedback information indicates that the quality of the signal transmitted by the ultra-wideband system is less than or equal to the first quality threshold, the first apparatus may determine to transmit the first-type data frame after the first time period.

In some other examples, the first apparatus may determine, based on the synchronization precision of the data frame received within the first time period and the first feedback information received within the first time period, to transmit the first-type data frame or the second-type data frame after the first time period. For example, the start time of the first time period is T0, and the end time of the first time period is T1. If the first apparatus receives the first feedback information at T2, and T2 is between T0 and T1, the first apparatus may determine, based on the synchronization precision of the data frame received within the first time period and the first feedback information received within the first time period, to transmit the first-type data frame or the second-type data frame after T1.

For example, if the synchronization precision of the data frame received within the first time period meets the requirement for the synchronization precision, and the first feedback information received within the first time period indicates that the quality of the signal transmitted by the ultra-wideband system is greater than the first quality threshold, the first apparatus may determine to transmit the second-type data frame after the first time period.

For another example, if the synchronization precision of the data frame received within the first time period does not meet the requirement for the synchronization precision, and/or the first feedback information received within the first time period indicates that the quality of the signal transmitted by the ultra-wideband system is less than or equal to the first quality threshold, the first apparatus may determine to transmit the first-type data frame after the first time period.

In some possible manners, the method shown in FIG. 4 further includes the following step.

**S406**: The first apparatus sends second indication information, and correspondingly, the second apparatus receives the second indication information.

The second indication information may indicate to increase or decrease lengths of the at least two sequences when the first-type data frame is to be transmitted. In other words, the second indication information may indicate whether a second length is longer than a first length or a second length is shorter than the first length. The first length is a length of each of at least two sequences in the first-type data frame transmitted in the first time period, and the second length is a length of each of at least two sequences in the first-type data frame transmitted in the time period after the first time period. The first-type data frame may include the at least two sequences. For specific content of the first-type data frame, refer to the descriptions of the first-type data frame in S404. Details are not described herein again. For example, if a value of the second indication information is a fifth value (for example, 0), it indicates to increase the lengths of the at least two sequences; and/or if the value of the second indication information is a sixth value (for example, 1), it indicates to decrease the lengths of the at least two sequences.

A sequence of performing S404 and S406 is not limited in this application.

In this manner, the first apparatus may accurately indicate, by using the second indication information, to increase or decrease the lengths of the at least two sequences when the first-type data frame is to be transmitted, so that the lengths of the at least two sequences can be flexibly adjusted, thereby avoiding unnecessary signaling overheads.

Optionally, the method shown in FIG. 4 further includes the following step.

**S407**: The first apparatus determines to increase or decrease the lengths of the at least two sequences.

Optionally, S407 and S406 may be combined or not combined. For example, when S407 and S406 are combined, S407 may be performed before S406. For another example, after the first apparatus determines to increase or decrease the lengths of the at least two sequences, the first apparatus may transmit, based on a determining result, a data frame including at least two sequences of corresponding lengths. In this case, S407 and S406 may not be combined.

S407 may be implemented in a plurality of manners, for example, Manner d1 or Manner d2.

**Manner d1**: The first apparatus may determine, based on synchronization precision of a data frame received within a second time period, to increase or decrease the lengths of the at least two sequences after the second time period.

In Manner d1, the first apparatus may first determine the synchronization precision of the data frame received within the second time period. For a determining manner, refer to the descriptions of determining, by the first apparatus, the synchronization precision of the data frame received within the first time period in Manner c1. Only the first time period is replaced with the second time period. Details are not described herein again.

Duration of the second time period may be preset, for example, specified in a protocol, or may be determined by the first apparatus, or may be notified to the first apparatus after being determined by another apparatus (for example, the second apparatus). It should be understood that the first time period may be the same as or different from the second time period.

In Manner d1, the first apparatus may determine, in a plurality of manners, to increase or decrease the lengths of the at least two sequences after the second time period. The following uses an example for description.

In some implementations, if the synchronization precision of the data frame received within the second time period meets the requirement for the synchronization precision, for example, if the synchronization precision of the data frame received within the second time period is greater than a second precision threshold, the first apparatus may determine to decrease the lengths of the at least two sequences after the second time period. The data frame received by the first apparatus within the second time period may be a first-type data frame. For example, within the second time period, a length of each of the at least two sequences in the data frame received by the first apparatus may be a length 1. If the synchronization precision of the data frame received within the second time period is greater than the second precision threshold, the length of each of the at least two sequences in the data frame received by the first apparatus after the second time period may be a length 2. The length 1 is greater than the length 2. In this example, when the requirement for the synchronization precision is met, the lengths of the at least two sequences transmitted between the first apparatus and the second apparatus may be shorter, so that overheads can be reduced and a system throughput rate can be increased when the requirement for the synchronization precision is met.

In some other implementations, if the synchronization precision of the data frame received within the second time period does not meet the requirement for the synchronization precision, for example, if the synchronization precision of the data frame received within the second time period is less than or equal to the second precision threshold, the first apparatus may determine to increase the lengths of the at least two sequences after the second time period. The data frame received by the first apparatus within the second time period may be a first-type data frame. For example, within the second time period, the length of each of the at least two sequences in the data frame received by the first apparatus may be a length 1. If the synchronization precision of the data frame received within the second time period is less than or equal to the second precision threshold, the length of each of the at least two sequences in the data frame received by the first apparatus after the second time period may be a length 3. The length 1 is less than the length 3. In this example, when the requirement for the synchronization precision is not met, the lengths of the at least two sequences transmitted between the first apparatus and the second apparatus may be longer, so that the synchronization precision can be improved.

The second precision threshold may be preset, for example, specified in a protocol, or may be determined by the first apparatus, or may be notified to the first apparatus after being determined by another apparatus (for example, the second apparatus). The second precision threshold may be the same as or different from the first precision threshold.

### Manner d2:

Manner d2 may include steps B1 and B2.

Step B1: The first apparatus may receive second feedback information from the ultra-wideband system, where the second feedback information indicates whether the quality of the signal transmitted by the ultra-wideband system is greater than a second quality threshold.

For specific content of Step B1, refer to Step A1. Only the first quality threshold is replaced with the second quality threshold. Details are not described herein again. It should be understood that the second precision threshold may be the same as or different from the first precision threshold.

Step B2: The first apparatus may determine, based on the second feedback information, to increase or decrease the lengths of the at least two sequences.

In some implementations, if the second feedback information indicates that the quality of the signal transmitted by the ultra-wideband system is greater than the second quality threshold, the first apparatus may determine to decrease the lengths of the at least two sequences. For example, a length of each of the at least two sequences in the data frame received by the first apparatus may be a length 1. If the second feedback information indicates that the quality of the signal transmitted by the ultra-wideband system is greater than the second quality threshold, after the second feedback information is received, the length of each of the at least two sequences in the data frame received by the first apparatus may be a length 2. The length 1 is greater than the length 2. In this example, overheads are reduced and a system throughput rate is increased when the quality of the signal transmitted by the ultra-wideband system is ensured.

In some other implementations, if the second feedback information indicates that the quality of the signal transmitted by the ultra-wideband system is less than or equal to the second quality threshold, the first apparatus may determine to increase the lengths of the at least two sequences. For example, a length of each of the at least two sequences in the data frame received by the first apparatus may be a length 1. If the second feedback information indicates that the quality of the signal transmitted by the ultra-wideband system is less than or equal to the second quality threshold, after the second feedback information is received, the length of each of the at least two sequences in the data frame received by the first apparatus may be a length 3. The length 1 is less than the length 3. In this example, when the quality of the signal transmitted by the ultra-wideband system does not meet a requirement, the lengths of the at least two sequences may be increased, to improve the synchronization precision and further improve the quality of the signal transmitted by the ultra-wideband system.

Optionally, in S407, an amplitude of increasing or decreasing the lengths of the at least two sequences may be preset, for example, specified in a protocol, or may be determined by the first apparatus, or may be notified to the first apparatus after being determined by another apparatus. This is not limited in this application.

It should be understood that S405 and S407 may be combined or not combined. For example, when S405 and S407 are combined, if the first apparatus determines to transmit the first-type data frame in S405, the first apparatus may determine, based on S407, to increase or decrease the lengths of the at least two sequences. For another example, the first-type data frame may be transmitted between the first apparatus and the second apparatus by default, and the first apparatus may determine, based on S407, to increase or decrease the lengths of the at least two sequences. In this case, S405 and S407 may not be combined.

Optionally, Manner d1 and Manner d2 may be combined or not combined. The following describes a possible example of combining Manner d1 and Manner d2.

In some examples, if the first apparatus receives the second feedback information within the second time period, the first apparatus may determine, in Manner d2, to increase or decrease the lengths of the at least two sequences after receiving the second feedback information. If the first apparatus does not receive the second feedback information when the second time period ends, the first apparatus may determine, in Manner d1, to increase or decrease the lengths of the at least two sequences after the second time period. For example, start time of the second time period is T3, and end time is of the second time period T4. If the first apparatus receives the second feedback information at T5, and T5 is between T3 and T4, the first apparatus may determine, in Manner d2, to increase or decrease the lengths of the at least two sequences after T5. If the first apparatus does not receive the second feedback information when the second time period ends, the first apparatus may determine, in Manner d1, to increase or decrease the lengths of the at least two sequences after T4.

Optionally, if the first apparatus receives the second feedback information when the second time period ends, the first apparatus may determine, based on the synchronization precision of the data frame received within the second time period and the second feedback information, to increase or decrease the lengths of the at least two sequences after the second time period. For example, if the synchronization precision of the data frame received within the second time period meets the requirement for the synchronization precision, and the second feedback information indicates that the quality of the signal transmitted by the ultra-wideband system is greater than the second quality threshold, the first apparatus may determine to decrease the lengths of the at least two sequences after the second time period. For another example, if the synchronization precision of the data frame received within the second time period does not meet the requirement for the synchronization precision, and/or the second feedback information indicates that the quality of the signal transmitted by the ultra-wideband system is less than or equal to the second quality threshold, the first apparatus may determine to increase the lengths of the at least two sequences after the second time period.

In some other examples, the first apparatus may determine, based on the synchronization precision of the data frame received within the second time period and the second feedback information received within the second time period, to increase or decrease the lengths of the at least two sequences after the second time period. For example, start time of the second time period is T3, and end time is of the second time period T4. If the first apparatus receives the second feedback information at T5, and T5 is between T3 and T4, the first apparatus may determine, based on the synchronization precision of the data frame received within the second time period and the second feedback information received within the second time period, to increase or decrease the lengths of the at least two sequences after T4.

For example, if the synchronization precision of the data frame received within the second time period meets the requirement for the synchronization precision, and the second feedback information received within the second time period indicates that the quality of the signal transmitted by the ultra-wideband system is greater than the second quality threshold, the first apparatus may determine to decrease the lengths of the at least two sequences after the second time period.

For another example, if the synchronization precision of the data frame received within the second time period does not meet the requirement for the synchronization precision, and/or the second feedback information received within the second time period indicates that the quality of the signal transmitted by the ultra-wideband system is less than or equal to the second quality threshold, the first apparatus may determine to increase the lengths of the at least two sequences after the second time period.

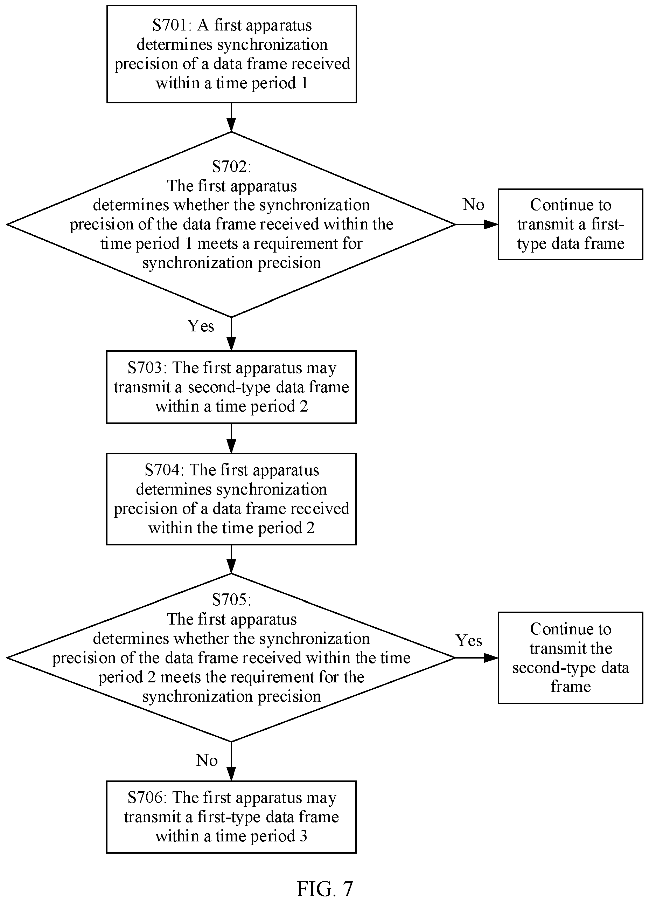

An embodiment of this application provides another communication method. The method shows a possible example of Manner c1 in the method shown in FIG. 4. FIG. 7 is a schematic flowchart corresponding to the communication method according to an embodiment of this application. In FIG. 7, an example in which a first apparatus is used as an execution body is used to illustrate the method. However, the execution body of the interaction illustration is not limited in this application. As shown in FIG. 7, the method includes the following steps.

**S701**: The first apparatus determines synchronization precision of a data frame received within a time period 1.

For specific content of S701, refer to the descriptions of first determining, by the first apparatus, the synchronization precision of the data frame received within the first time period in Manner c1. Only the first time period is replaced with the time period 1. Details are not described again.

Optionally, before the time period 1, a narrowband auxiliary service of the first apparatus starts. In other words, the first apparatus may assist in synchronization by using a narrowband signal. For example, the first apparatus may perform coarse time and frequency offset synchronization based on the narrowband signal, to obtain an initial estimated value, and perform synchronization based on the initial estimated value.

In some implementations, within the time period 1, the first apparatus may transmit a first-type data frame, in other words, a frame format extension function of the first apparatus is enabled. For specific content of the first-type data frame, refer to the descriptions of the first-type data frame in S404. Details are not described herein again.

**S702**: The first apparatus determines whether the synchronization precision of the data frame received within the time period 1 meets a requirement for synchronization precision. If the synchronization precision of the data frame received within the time period 1 meets the requirement for the synchronization precision, S703 is performed; or if the synchronization precision of the data frame received within the time period 1 does not meet the requirement for the synchronization precision, the first apparatus may continue to transmit the first-type data frame.

For specific content of determining, by the first apparatus, whether the synchronization precision of the data frame received within the time period 1 meets the requirement for the synchronization precision, refer to the descriptions of "the synchronization precision of the data frame received within the time period 1 meets the requirement for the synchronization precision" and "the synchronization precision of the data frame received within the time period 1 does not meet the requirement for the synchronization precision" in Manner c1. Details are not described herein again.

**S703**: The first apparatus may transmit a second-type data frame within a time period 2 after the time period 1. In other words, frame format extension of the first apparatus is disabled within the time period 2.

**S704**: The first apparatus determines synchronization precision of a data frame received within the time period 2.

**S705**: The first apparatus determines whether the synchronization precision of the data frame received within the time period 2 meets the requirement for the synchronization precision. If the synchronization precision of the data frame received within the time period 2 meets the requirement for the synchronization precision, the first apparatus may continue to transmit the second-type data frame; or if the synchronization precision of the data frame received within the time period 2 does not meet the requirement for the synchronization precision, S706 may be performed.

For specific content of S704 and S705, refer to S701 and S702. Only the time period 1 is replaced with the time period 2. Details are not described herein again.

**S706**: Within a time period 3 after the time period 2, the first apparatus may transmit a first-type data frame, in other words, frame format extension of the first apparatus is enabled within the time period 3.

The first apparatus may repeatedly perform S701 to S706 until the narrowband auxiliary service ends.

According to the method shown in FIG. 7, the first apparatus may accurately determine, based on synchronization precision of a data frame received within a time period, to transmit the first-type data frame or the second-type data frame after the time period. This method can reduce overheads and improve a system throughput rate while meeting the requirement for the synchronization precision.

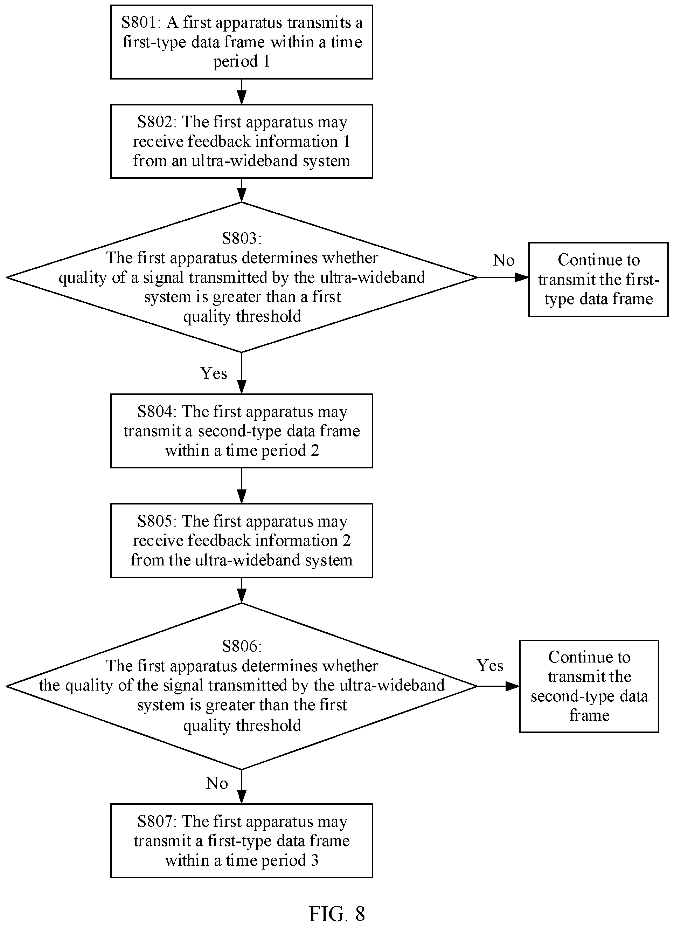

An embodiment of this application provides still another communication method. The method shows a possible example of Manner c2 in the method shown in FIG. 4. In FIG. 8, an example in which a first apparatus is used as an execution body is used to illustrate the method. However, the execution body of the interaction illustration is not limited in this application. As shown in FIG. 8, the method includes the following steps.

**S801**: Within a time period 1, the first apparatus transmits a first-type data frame, in other words, frame format extension of the first apparatus is enabled.

For specific content of the first-type data frame, refer to the descriptions of the first-type data frame in S404. Details are not described herein again.

Optionally, before S801, a narrowband auxiliary service of the first apparatus starts. In other words, the first apparatus may assist in synchronization by using a narrowband signal. For example, the first apparatus may perform coarse time and frequency offset synchronization based on the narrowband signal, to obtain an initial estimated value, and perform synchronization based on the initial estimated value.

**S802**: The first apparatus may receive feedback information 1 from an ultra-wideband system, where the feedback information 1 may indicate whether quality of a signal transmitted by the ultra-wideband system is greater than a first quality threshold.

For specific content of S802, refer to Step A1. Only the first feedback information is replaced with the feedback information 1. Details are not described herein again.

**S803**: The first apparatus determines, based on the feedback information 1, whether the quality of the signal transmitted by the ultra-wideband system is greater than the first quality threshold. If the quality of the signal transmitted by the ultra-wideband system is greater than the first quality threshold, S804 is performed; or if the quality of the signal transmitted by the ultra-wideband system is less than or equal to the first quality threshold, the first apparatus may continue to transmit the first-type data frame.

For specific content of S803, refer to the descriptions of "the first apparatus may determine, based on the first feedback information, whether the quality of the signal transmitted by the ultra-wideband system is greater than the first quality threshold" in Step A1. Only the first feedback information is replaced with the feedback information 1. Details are not described herein again.

**S804**: Within a time period 2 after the time period 1, the first apparatus may transmit a second-type data frame, in other words, frame format extension of the first apparatus is disabled.

**S805**: The first apparatus may receive feedback information 2 from the ultra-wideband system, where the feedback information 2 may indicate whether the quality of the signal transmitted by the ultra-wideband system is greater than the first quality threshold.

**S806**: The first apparatus determines, based on the feedback information 2, whether the quality of the signal transmitted by the ultra-wideband system is greater than the first quality threshold. If the quality of the signal transmitted by the ultra-wideband system is greater than the first quality threshold, the first apparatus may continue to transmit the second-type data frame; or if the quality of the signal transmitted by the ultra-wideband system is less than or equal to the first quality threshold, S807 is performed.

For specific content of S805 and S806, refer to S802 and S803. Only the feedback information 1 is replaced with the feedback information 2. Details are not described herein again.

**S807**: The first apparatus may transmit a first-type data frame within a time period 3 after the time period 2.

The first apparatus may repeatedly perform S801 to S807 until the narrowband auxiliary service ends.

According to the method shown in FIG. 8, the first apparatus may accurately determine, based on feedback information of the ultra-wideband system, to transmit the first-type data frame or the second-type data frame. This method can reduce overheads and improve a system throughput rate while meeting the requirement for the synchronization precision.

It should be understood that the methods shown in FIG. 7 and FIG. 8 may be combined or not combined. For a manner of combining FIG. 7 and FIG. 8, refer to the foregoing descriptions of "a possible example of combining Manner c1 and Manner c2".

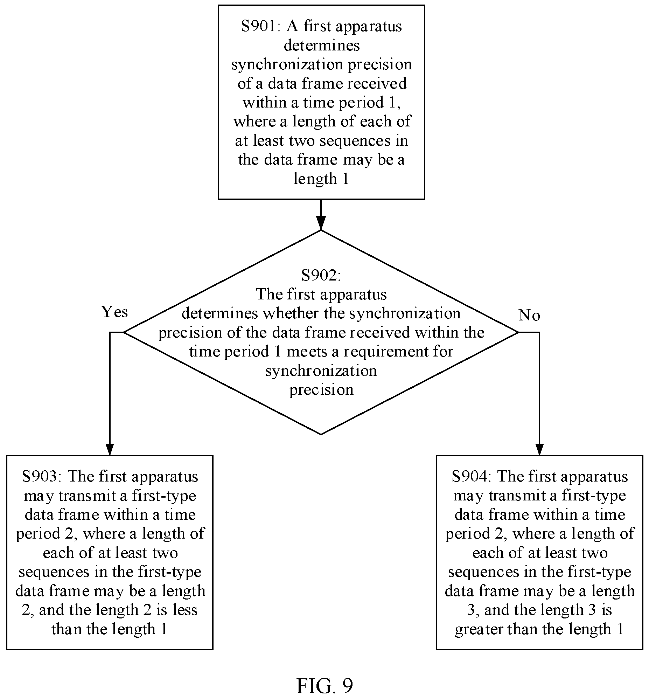

An embodiment of this application provides still another communication method. The method shows a possible example of Manner d1 in the method shown in FIG. 4. FIG. 9 is a schematic flowchart corresponding to the communication method according to an embodiment of this application. In FIG. 9, an example in which a first apparatus is used as an execution body is used to illustrate the method. However, the execution body of the interaction illustration is not limited in this application. As shown in FIG. 9, the method includes the following steps.

**S901**: The first apparatus determines synchronization precision of a data frame received within a time period 1, where a length of each of at least two sequences in the data frame may be a length 1.

For specific content of S901, refer to S701. No repeated description is provided.

Optionally, within the time period 1, a length of each of at least two sequences in a first-type data frame transmitted by the first apparatus may be the length 1.

**S902**: The first apparatus determines whether the synchronization precision of the data frame received within the time period 1 meets a requirement for synchronization precision. If the synchronization precision of the data frame received within the time period 1 meets the requirement for the synchronization precision, S903 is performed; or if the synchronization precision of the data frame received within the time period 1 does not meet the requirement for the synchronization precision, S904 is performed.

For specific content of S902, refer to S702. Details are not described herein again.

**S903**: The first apparatus may transmit the first-type data frame within a time period 2 after the time period 1. The length of each of the at least two sequences in the first-type data frame may be a length 2, and the length 2 is less than the length 1.

**S904**: The first apparatus may transmit the first-type data frame within the time period 2 after the time period 1. The length of each of the at least two sequences in the first-type data frame may be a length 3, and the length 3 is greater than the length 1.

The first apparatus may repeatedly perform S901 to S904 until a narrowband auxiliary service ends. For example, when the narrowband auxiliary service starts, the length of each of the at least two sequences in the first-type data frame transmitted by the first apparatus may be 63 symbols. According to the method shown in FIG. 9, the length of each of the at least two sequences may be successively changed to 31 symbols, 15 symbols, and 0 symbols.

According to the method shown in FIG. 9, the first apparatus may accurately determine, based on synchronization precision of a data frame received within a time period, to increase or decrease lengths of the at least two sequences after the time period. This method can reduce overheads and improve a system throughput rate while meeting the requirement for the synchronization precision.

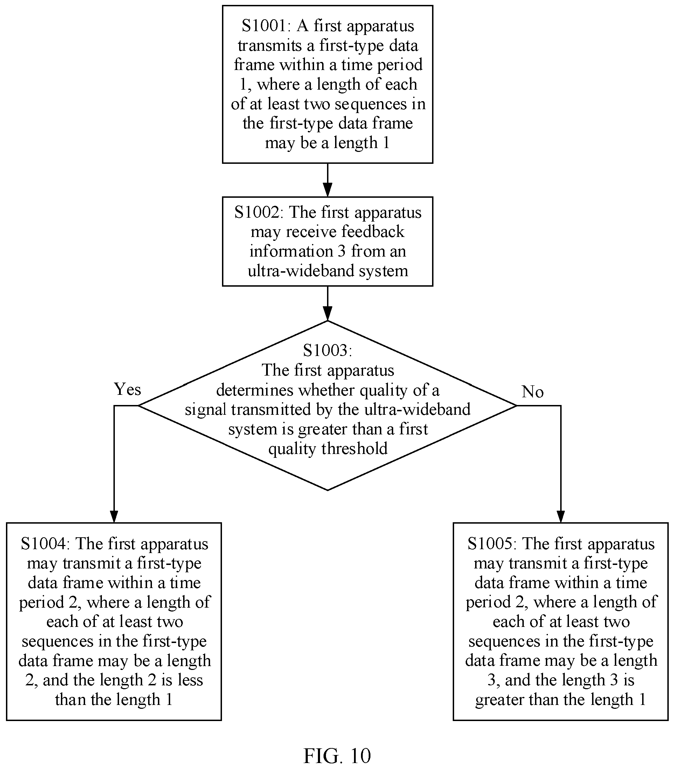

An embodiment of this application provides still another communication method. The method shows a possible example of Manner d2 in the method shown in FIG. 4. FIG. 10 is a schematic flowchart corresponding to the communication method according to an embodiment of this application. In FIG. 10, an example in which a first apparatus is used as an execution body is used to illustrate the method. However, the execution body of the interaction illustration is not limited in this application. As shown in FIG. 10, the method includes the following steps.

**S1001**: Within a time period 1, the first apparatus transmits a first-type data frame, in other words, frame format extension of the first apparatus is enabled. A length of each of at least two sequences in the first-type data frame may be a length 1.

For specific content of S1001, refer to S801. No repeated description is provided.

Optionally, in S1001, the length of each of the at least two sequences in the first-type data frame transmitted by the first apparatus may be the length 1.

**S1002**: The first apparatus may receive feedback information 3 from an ultra-wideband system, where the feedback information 3 may indicate whether quality of a signal transmitted by the ultra-wideband system is greater than a first quality threshold.

For specific content of S1002, refer to Step A1. Only the first feedback information is replaced with the feedback information 3. Details are not described herein again.

**S1003**: The first apparatus determines, based on the feedback information 3, whether the quality of the signal transmitted by the ultra-wideband system is greater than the first quality threshold. If the quality of the signal transmitted by the ultra-wideband system is greater than the first quality threshold, S1004 is performed; or if the quality of the signal transmitted by the ultra-wideband system is less than or equal to the first quality threshold, S1005 is performed.

For specific content of S1003, refer to the descriptions of "the first apparatus may determine, based on the first feedback information, whether the quality of the signal transmitted by the ultra-wideband system is greater than the first quality threshold" in Step A1. Only the first feedback information is replaced with the feedback information 3. Details are not described herein again.

**S1004**: The first apparatus may transmit the first-type data frame within a time period 2 after the time period 1. The length of each of the at least two sequences in the first-type data frame may be a length 2, and the length 2 is less than the length 1.

**S1005**: The first apparatus may transmit the first-type data frame within the time period 2 after the time period 1. The length of each of the at least two sequences in the first-type data frame may be a length 3, and the length 3 is greater than the length 1.

The first apparatus may repeatedly perform S1001 to S1005 until a narrowband auxiliary service ends. For example, when the narrowband auxiliary service starts, the length of each of the at least two sequences in the first-type data frame transmitted by the first apparatus may be 63 symbols. According to the method shown in FIG. 10, the length of each of the at least two sequences may be successively changed to 31 symbols, 15 symbols, and 0 symbols in a time sequence.

According to the method shown in FIG. 10, the first apparatus may accurately determine, based on feedback information from the ultra-wideband system, to increase or decrease the lengths of the at least two sequences after the time period. This method can reduce overheads and improve a system throughput rate while meeting the requirement for the synchronization precision.

It should be understood that the methods shown in FIG. 9 and FIG. 10 may be combined or not combined. For a manner of combining FIG. 9 and FIG. 10, refer to the foregoing descriptions of "a possible example of combining Manner d1 and Manner d2".

Based on a same technical idea as the foregoing method embodiments, an embodiment of this application provides a corresponding communication apparatus that can have a function of performing related steps in the foregoing method embodiments. The function may be implemented by hardware, may be implemented by software, or may be implemented by hardware by executing corresponding software. The hardware or the software includes one or more modules corresponding to the function. The communication apparatus may be a terminal, or may be a module (for example, a circuit or a chip) in a terminal, or may be a logical node, a logical module, or software that can implement all or some functions of a terminal or an access network device. Alternatively, the communication apparatus may be an access network device or a module (for example, a circuit or a chip) in an access network device, or may be a logical node, a logical module, or software that can implement all or some functions of an access network device.

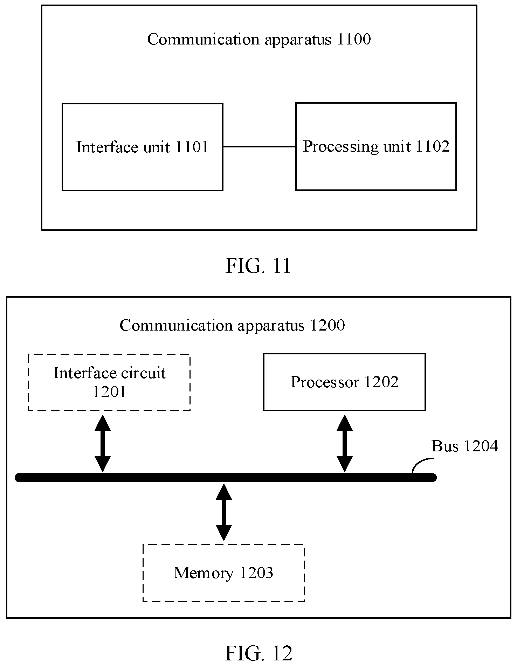

In a possible implementation, a structure of the communication apparatus provided in embodiments of this application is shown in FIG. 11, and the communication apparatus includes a processing unit 1102. Optionally, the communication apparatus further includes an interface unit 1101. The following describes functions of the units in the communication apparatus 1100.

The interface unit 1101 is configured to input and/or output information. Inputting information may be replaced with receiving information, and outputting information may be replaced with sending information. When outputting the information, the interface unit 1101 may output the information to an apparatus other than the communication apparatus 1100, or may output the information to another unit in the communication apparatus 1100. In some manners, the interface unit 1101 may be implemented by using at least one of a physical interface, a communication module, a communication interface, and an input/output interface. In some other manners, the interface unit 1101 may be implemented by using an interface circuit, for example, a mobile communication module. The mobile communication module may include one or more of at least one antenna, at least one filter, a switch, a power amplifier, a low noise amplifier (low noise amplifier, LNA), and the like.

The processing unit 1102 may be configured to support the communication apparatus 1100 in performing a processing action in the foregoing method embodiments. The processing unit 1102 may be implemented by using one or more processors. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

In an implementation, the communication apparatus 1100 is used in the first apparatus in embodiments of this application shown in FIG. 4. The following describes a specific function of the processing unit 1102 in this implementation.

The processing unit 1102 is configured to: receive a first data frame by using the interface unit 1101, where a frame type of the first data frame is a SparkLink radio frame type 1 or a SparkLink radio frame type 2, the first data frame includes at least two sequences, and any two of the at least two sequences are the same; and process the first data frame.

In some possible manners, the processing unit 1102 is further configured to send first indication information by using the interface unit 1101. The first indication information indicates to transmit a first-type data frame or a second-type data frame, the first-type data frame includes all fields of the second-type data frame, the first-type data frame includes at least two sequences, and the second-type data frame does not include the at least two sequences, or the second-type data frame includes one of the at least two sequences.

Optionally, the processing unit 1102 is further configured to determine to transmit the first-type data frame or the second-type data frame.

For example, the processing unit 1102 is specifically configured to: determine, based on synchronization precision of a data frame received within a first time period, to transmit the first-type data frame or the second-type data frame after the first time period; or receive first feedback information from an ultra-wideband system by using the interface unit 1101, where the first feedback information indicates whether quality of a signal transmitted by the ultra-wideband system is greater than a first quality threshold; and determine, based on the first feedback information, to transmit the first-type data frame or the second-type data frame.

In some examples, the processing unit 1102 is specifically configured to: when the synchronization precision of the data frame received within the first time period is greater than a first precision threshold, determine to transmit the second-type data frame after the first time period; and/or when the synchronization precision of the data frame received within the first time period is less than or equal to the first precision threshold, determine to transmit the first-type data frame after the first time period.

In some other examples, the processing unit 1102 is specifically configured to: when the first feedback information indicates that the quality of the signal transmitted by the ultra-wideband system is greater than a first quality threshold, determine to transmit the second-type data frame; and/or when the first feedback information indicates that the quality of the signal transmitted by the ultra-wideband system is less than or equal to the first quality threshold, determine to transmit the first-type data frame.

In some other possible manners, the processing unit 1102 is further configured to send second indication information by using the interface unit 1101. The second indication information indicates to increase or decrease lengths of the at least two sequences when the first-type data frame is to be transmitted, and the first-type data frame includes the at least two sequences.

Optionally, the processing unit 1102 is further configured to determine to increase or decrease the lengths of the at least two sequences.

For example, the processing unit 1102 is specifically configured to: determine, based on synchronization precision of a data frame received within a second time period, to increase or decrease the lengths of the at least two sequences after the second time period; or receive second feedback information from the ultra-wideband system by using the interface unit 1101, where the second feedback information indicates whether the quality of the signal transmitted by the ultra-wideband system is greater than a second quality threshold; and determine, based on the second feedback information, to increase or decrease the lengths of the at least two sequences.

In some examples, the processing unit 1102 is specifically configured to: when the synchronization precision of the data frame received within the second time period is greater than a second precision threshold, determine to decrease the lengths of the at least two sequences after the second time period; and/or when the synchronization precision of the data frame received within the second time period is less than or equal to the second precision threshold, determine to increase the lengths of the at least two sequences after the second time period.

In some other examples, the processing unit 1102 is specifically configured to: when the second feedback information indicates that the quality of the signal transmitted by the ultra-wideband system is greater than the second quality threshold, determine to decrease the lengths of the at least two sequences; and/or when the second feedback information indicates that the quality of the signal transmitted by the ultra-wideband system is less than or equal to the second quality threshold, determine to increase the lengths of the at least two sequences.

In another implementation, the communication apparatus 1100 is used in the second apparatus in embodiments of this application shown in FIG. 4. The following describes a specific function of the processing unit 1102 in this implementation.

The processing unit 1102 is configured to: generate a first data frame, where a frame type of the first data frame is a SparkLink radio frame type 1 or a SparkLink radio frame type 2, the first data frame includes at least two sequences, and any two of the at least two sequences are the same; and send the first data frame by using the interface unit 1101.

In some possible manners, the processing unit 1102 is further configured to receive first indication information by using the interface unit 1101. The first indication information indicates to transmit a first-type data frame or a second-type data frame, the first-type data frame includes all fields of the second-type data frame, the first-type data frame includes at least two sequences, and the second-type data frame does not include the at least two sequences, or the second-type data frame includes one of the at least two sequences.

In some other possible manners, the processing unit 1102 is further configured to receive second indication information by using the interface unit 1101. The second indication information indicates to increase or decrease lengths of the at least two sequences when the first-type data frame is to be transmitted, and the first-type data frame includes the at least two sequences.

For more detailed descriptions of the processing unit 1102 and the interface unit 1101, refer to related descriptions in the method embodiment shown in FIG. 4. Details are not described herein again.

It should be noted that division into the modules in the foregoing embodiments of this application is an example, and is merely logical function division. In actual implementation, there may be another division manner. In addition, functional units in embodiments of this application may be integrated into one processing unit, may exist alone physically, or two or more units may be integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in form of a software product. The software product is stored in a storage medium and includes several instructions for instructing a computer device (which may be a personal computer, a server, a network device) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

In a possible implementation, for a communication apparatus provided in an embodiment of this application, refer to FIG. 12. The communication apparatus 1200 includes a processor 1202. Optionally, the communication apparatus 1200 further includes an interface circuit 1201 and a memory 1203. The interface circuit 1201, the processor 1202, and the memory 1203 are coupled to each other.

Optionally, the interface circuit 1201, the processor 1202, and the memory 1203 are coupled to each other through a bus 1204. The bus 1204 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one bold line represents the bus in FIG. 12, but this does not mean that there is only one bus or only one type of bus.

The interface circuit 1201 is configured to input and/or output information. Inputting information may be replaced with receiving information, and outputting information may be replaced with sending information. When outputting the information, the interface circuit 1201 may output the information to an apparatus other than the communication apparatus 1200, or may output the information to another unit in the communication apparatus 1200. For example, the interface circuit 1201 may be implemented through at least one of a physical interface, a communication module, a communication interface, an input/output interface, and a mobile communication module. The mobile communication module may include one or more of at least one antenna, at least one filter, a switch, a power amplifier, an LNA, and the like.

The processor 1202 may be configured to support the communication apparatus 1200 in performing processing actions in the foregoing method embodiments. When the communication apparatus 1200 is configured to implement the foregoing method embodiments, the processor 1202 may be further configured to implement the functions of the processing unit 1102. The processor 1202 may be a CPU, or may be another general-purpose processor, a DSP, an ASIC, an FPGA or another programmable logic device, a transistor logic device, a hardware component, or any combination thereof. The general purpose processor may be a microprocessor or any regular processor or the like.

In an implementation, the communication apparatus 1200 is used in the first apparatus in embodiments of this application shown in FIG. 4. The following describes a specific function of the processor 1202 in this implementation.

The processor 1202 is configured to: receive a first data frame by using the interface circuit 1201, where a frame type of the first data frame is a SparkLink radio frame type 1 or a SparkLink radio frame type 2, the first data frame includes at least two sequences, and any two of the at least two sequences are the same; and process the first data frame.

In another implementation, the communication apparatus 1200 is used in the second apparatus in embodiments of this application shown in FIG. 4. The following describes a specific function of the processor 1202 in this implementation.

The processor 1202 is configured to: generate a first data frame, where a frame type of the first data frame is a SparkLink radio frame type 1 or a SparkLink radio frame type 2, the first data frame includes at least two sequences, and any two of the at least two sequences are the same; and send the first data frame by using the interface circuit 1201.

For the specific function of the processor 1202, refer to the descriptions in the communication method provided in the foregoing embodiments of this application and the instances, and the descriptions of the specific functions of the communication apparatus 1100 in the embodiment of this application shown in FIG. 11. Details are not described herein again.

The memory 1203 is configured to store program instructions, data, and/or the like. Specifically, the program instructions may include program code. The program code includes computer operation instructions. The memory 1203 may include a RAM, or may include a non-volatile memory (non-volatile memory), for example, at least one magnetic disk storage. The processor 1202 executes the program instructions stored in the memory 1203, and implements the foregoing functions by using the data stored in the memory 1203, to implement the communication methods provided in the foregoing embodiments of this application. The memory 1203 may be integrated with the processor 1202, or may be a memory outside the communication apparatus.

It may be understood that the memory 1203 in FIG. 12 of this application may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

Based on the foregoing embodiments, an embodiment of this application further provides a computer program product including computer-executable instructions. When the computer program product is run, the method provided in the foregoing embodiments is enabled to be performed.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions related to the devices in the foregoing embodiments. In a possible design, the chip system further includes a memory, and the memory is configured to store a program and data that are necessary for the computer apparatus. The chip system may include a chip, or may include a chip and another discrete component.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" usually indicates an "or" relationship between associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
receiving a first data frame, wherein a frame type of the first data frame is a SparkLink radio frame type 1 or a SparkLink radio frame type 2, the first data frame comprises at least two sequences, and any two of the at least two sequences are the same; and
processing the first data frame.

2. The method according to claim 1, wherein the first data frame further comprises a cyclic redundancy check CRC field, and the at least two sequences are located after the CRC field.

3. The method according to claim 2, wherein a sequence used to control a spacing between adjacent sequences in the at least two sequences exists between the adjacent sequences.

4. The method according to claim 1, wherein the first data frame further comprises a CRC field, and one of the at least two sequences is located before the CRC field.

5. The method according to claim 4, wherein the first data frame comprises a synchronization sequence field, the synchronization sequence field is located before the CRC field, the at least two sequences are a part or all of at least two synchronization sequences, and one of the at least two sequences is comprised in the synchronization sequence field.

6. The method according to claim 4, wherein the first data frame comprises a physical layer data information field, the physical layer data information field is located before the CRC field, the at least two sequences are at least two data sequences, and one of the at least two sequences is comprised in the physical layer data information field.

7. The method according to any one of claims 4 to 6, wherein N sequences in the at least two sequences are located after the CRC field, N is a positive integer, and a sequence used to control a spacing between adjacent sequences in the N sequences exists between the adjacent sequences.

8. The method according to any one of claims 1 to 7, further comprising:
sending first indication information, wherein the first indication information indicates to transmit a first-type data frame or a second-type data frame, the first-type data frame comprises all fields of the second-type data frame, the first-type data frame comprises the at least two sequences, and the second-type data frame does not comprise the at least two sequences, or the second-type data frame comprises one of the at least two sequences.

9. The method according to claim 8, the method further comprises:
determining to transmit the first-type data frame or the second-type data frame.

10. The method according to claim 9, wherein determining to transmit the first-type data frame or the second-type data frame comprises:
determining, based on synchronization precision of a data frame received within a first time period, to transmit the first-type data frame or the second-type data frame after the first time period; or
receiving first feedback information from an ultra-wideband system, wherein the first feedback information indicates whether quality of a signal transmitted by the ultra-wideband system is greater than a first quality threshold; and determining, based on the first feedback information, to transmit the first-type data frame or the second-type data frame.

11. The method according to claim 10, wherein determining, based on the synchronization precision of the data frame received within the first time period, to transmit the first-type data frame or the second-type data frame after the first time period comprises:
if the synchronization precision of the data frame received within the first time period is greater than a first precision threshold, determining to transmit the second-type data frame after the first time period; and/or
if the synchronization precision of the data frame received within the first time period is less than or equal to the first precision threshold, determining to transmit the first-type data frame after the first time period.

12. The method according to claim 10, wherein determining, based on the first feedback information, to transmit the first-type data frame or the second-type data frame comprises:
if the first feedback information indicates that the quality of the signal transmitted by the ultra-wideband system is greater than the first quality threshold, determining to transmit the second-type data frame; and/or
if the first feedback information indicates that the quality of the signal transmitted by the ultra-wideband system is less than or equal to the first quality threshold, determining to transmit the first-type data frame.

13. The method according to any one of claims 1 to 12, further comprising:
sending second indication information, wherein the second indication information indicates to increase or decrease lengths of the at least two sequences when the first-type data frame is to be transmitted, and the first-type data frame comprises the at least two sequences.

14. The method according to claim 13, the method further comprises:
determining to increase or decrease the lengths of the at least two sequences.

15. The method according to claim 14, wherein determining to increase or decrease the lengths of the at least two sequences comprises:
determining, based on synchronization precision of a data frame received within a second time period, to increase or decrease the lengths of the at least two sequences after the second time period; or
receiving second feedback information from the ultra-wideband system, wherein the second feedback information indicates whether the quality of the signal transmitted by the ultra-wideband system is greater than a second quality threshold; and determining, based on the second feedback information, to increase or decrease the lengths of the at least two sequences.

16. The method according to claim 15, wherein determining, based on the synchronization precision of the data frame received within the second time period, to increase or decrease the lengths of the at least two sequences after the second time period comprises:
if the synchronization precision of the data frame received within the second time period is greater than a second precision threshold, determining to decrease the lengths of the at least two sequences after the second time period; and/or
if the synchronization precision of the data frame received within the second time period is less than or equal to the second precision threshold, determining to increase the lengths of the at least two sequences after the second time period.

17. The method according to claim 15, wherein determining, based on the second feedback information, to increase or decrease the lengths of the at least two sequences comprises:
if the second feedback information indicates that the quality of the signal transmitted by the ultra-wideband system is greater than the second quality threshold, determining to decrease the lengths of the at least two sequences; and/or
if the second feedback information indicates that the quality of the signal transmitted by the ultra-wideband system is less than or equal to the second quality threshold, determining to increase the lengths of the at least two sequences.

18. A communication method, comprising:
generating a first data frame, wherein a frame type of the first data frame is a SparkLink radio frame type 1 or a SparkLink radio frame type 2, the first data frame comprises at least two sequences, and any two of the at least two sequences are the same; and
sending the first data frame.

19. The method according to claim 18, wherein the first data frame further comprises a cyclic redundancy check CRC field, and the at least two sequences are located after the CRC field.

20. The method according to claim 19, wherein a sequence used to control a spacing between adjacent sequences in the at least two sequences exists between the adjacent sequences.

21. The method according to claim 18, wherein the first data frame further comprises a CRC field, and one of the at least two sequences is located before the CRC field.

22. The method according to claim 21, wherein the first data frame comprises a synchronization sequence field, the synchronization sequence field is located before the CRC field, the at least two sequences are a part or all of at least two synchronization sequences, and one of the at least two sequences is comprised in the synchronization sequence field.

23. The method according to claim 21, wherein the first data frame comprises a physical layer data information field, the physical layer data information field is located before the CRC field, the at least two sequences are at least two data sequences, and one of the at least two data sequences is comprised in the physical layer data information field.

24. The method according to any one of claims 21 to 23, wherein N sequences in the at least two sequences are located after the CRC field, N is a positive integer, and a sequence used to control a spacing between adjacent sequences in the N sequences exists between the adjacent sequences.

25. The method according to any one of claims 18 to 24, further comprising:
receiving first indication information, wherein the first indication information indicates to transmit a first-type data frame or a second-type data frame, the first-type data frame comprises all fields of the second-type data frame, the first-type data frame comprises the at least two sequences, and the second-type data frame does not comprise the at least two sequences, or the second-type data frame comprises one of the at least two sequences.

26. The method according to any one of claims 18 to 25, further comprising:
receiving second indication information, wherein the second indication information indicates to increase or decrease lengths of the at least two sequences when the first-type data frame is to be transmitted, and the first-type data frame comprises the at least two sequences.

27. A communication apparatus, comprising a unit configured to perform the method according to any one of claims 1 to 17, or comprising a unit configured to perform the method according to any one of claims 18 to 26.

28. A communication apparatus, comprising a processor, wherein the processor executes instructions, to enable the apparatus to perform the method according to any one of claims 1 to 17, or to enable the apparatus to perform the method according to any one of claims 18 to 26.

29. A computer-readable storage medium, wherein the computer-readable storage medium stores a computer program or instructions, and when the computer program or the instructions are executed, the method according to any one of claims 1 to 26 is implemented.

30. A computer program product, wherein the computer program product comprises computer program code, and when the computer program code is run, the method according to any one of claims 1 to 26 is implemented.
